# EUROPEAN PATENT SPECIFICATION

(11) **EP 2 911 997 B1**
(45) Date of publication and mention of the grant of the patent: **05.12.2018**
(21) Application number: 13792272.0
(22) Date of filing: 24.10.2013
(51) Int. Cl.: C05D 9/00, C05D 9/02, C05G 3/00

(54) **PLANT GROWTH ENHANCER**
PFLANZENWACHSTUMSVERSTÄRKER
AGENT FAVORISANT LA CROISSANCE DES VÉGÉTAUX

(30) Priority: 24.10.2012 EP 12189809; 05.06.2013 EP 13170655
(43) Date of publication of application: 02.09.2015
(73) Proprietor: Thermolon Korea Co., Ltd., Ganseo-gu, Busan 618-817 (KR); V1 BVBA, 9051 Afsnee (BE)
(72) Inventor: HELSKENS, Jan, B-9070 Destelbergen (BE); PARK, Chung Kwon, Busan 618-817 (KR)
(74) Representative: Gyi, Jeffrey Ivan
(86) International application number: PCT/EP2013/072299
(87) International publication number: WO 2014/064205

(56) References cited:
- WO-A1-2011/092577
- US-A1- 2004 091 417
- US-A1- 2008 029 039
- US-A1- 2010 024 501
- DATABASE WPI Week 201049 Thomson Scientific, London, GB; AN 2010-J12743 XP002700287, & WO 2010/079882 A1 (THERMOLON KOREA CO LTD) 15 July 2010 (2010-07-15)
- DATABASE WPI Week 201171 Thomson Scientific, London, GB; AN 2011-N10901 XP002700288, & WO 2011/129502 A1 (HAN S C) 20 October 2011 (2011-10-20)

## Description

### FIELD OF THE INVENTION

The present invention relates to the field of agricultural sciences. In particular, the invention relates to a plant growth enhancer and its applications in the field of agriculture.

### BACKGROUND OF THE INVENTION

Compositions improving the soil such as fertilizers are used to increase crop yield per hectare and to make unsuitable soils capable of supporting crops that otherwise would not have been viable.

An important way of improving crop yield has been achieved through the application of increasing amounts of fertilizers.

However, the use of fertilizers and more specifically inorganic fertilizers may provide several complex soil problems such as soil acidification, soil contamination, soil sterilization, and soil trace mineral depletion. The continued use of inorganic fertilizers may cause imbalances in the amount of essential nutrients in the treated soil. Thus, the soils are often rendered unsuitable for economically sustained farming.

Several examples of fertilizers or component therein are known in the art. US 2010/024501 describes precision customized control release fertilizers comprising a crop specific customized fertilizer and/or a normal fertilizer, an agropolymer made by reacting an alkaline or hydrogen peroxide with plant material and a transition metal silicate or an amorphous silica. US 2004/091417 describes the preparation of silver and silver oxide nanoparticles, wherein the collected powders were analyzed and were found to be pure silver. WO 2011/092577 concerns a functionally effective urea composition for plant growth and yield increase, for use with or without other fertilizers, wherein reacting urea to alkali metal silicate (such as potassium silicate) or salt or mixture thereof, and/or reacting urea to transition metal salt (such as zinc sulphate) or silicate or oxide or mixture thereof, and/or reacting urea to organic extract of lignite.

Recently, soil-mimicking and/or soil-less plant culture substrates such as hydroponics are used around the world for (food) crop production.

In view of the above, it is an object of the present invention to provide further and/or improved compounds that are able to increase crop yield without growth damage or damage to the growth medium. Furthermore, it is an object of the present invention to provide such compounds which are easily applicable to the crops by the farmer, for instance in a hydroponic system.

### SUMMARY OF THE INVENTION

Through extensive experimental testing, the present inventors have found a porous silica comprising a particulate metallic element that advantageously affords enhancement of plant growth.

Hence, the present invention relates to the use of a porous silica particle as a plant growth enhancer, said porous silica particle comprises porous silica comprising a particulate metallic element, wherein the porous silica is microporous or mesoporous silica, and the particulate metallic element has an oxidation state zero.

The present use of the porous silica particle advantageously allows an increase in the growth of the plants. Such use of the porous silica particle advantageously does not cause fertilizer harm nor growth damage to the plants. Furthermore, the use of the porous silica particle embodying the principles of the present invention allows growth enhancement of plants by using standard application rates of the porous silica particle. Hence, the present use of the porous silica particle allows plant growth enhancement in an economical and environmentally responsible manner.

In a second aspect described herein relates to the use of a granular composition as a plant growth enhancer, said granular composition comprising a carrier material and one or more porous silica particles embedded in said carrier material, wherein each porous silica particle comprises porous silica comprising a particulate metallic element.

Preferably, the present invention relates to the use of a granular composition as a plant growth enhancer, said granular composition comprising a carrier material and one or more spherical porous silica particles embedded in said carrier material, wherein each spherical porous silica particle comprises spherical porous silica comprising a particulate metallic element wherein the porous silica is microporous or mesoporous silica, and the particulate metallic element has an oxidation state zero.

The present use of the granular composition advantageously increases plant growth for instances of vegetable crops such as but not limited to radish, tomato, onion, cabbage and lettuce as illustrated in the examples. Such use of the granular composition allows an increase of the growth of the plants such as the length of the plant, fresh weight of the plant, leaves of the plant, number of leaves of the plant, length of the leaves of the plant, weight of the roots of the plant, length of the roots of the plant, number of roots of the plant, diameter of the roots of the plant and/or length of the region of root hair growth of the plant.

Furthermore, the present use of the granular composition allows enhancing plant growth, while growing healthy plants without any signs of growth damage or fertilizer harm. Also, the present use of the granular composition allows growth enhancement of plants while using standard application rates of the granular composition. Hence, such use of the granular composition allows plant growth enhancement for instances of vegetable crops such as but not limited to radish, tomato, onion, cabbage and lettuce in an economically and ecologically friendly way.

Further described herein is a granular composition comprising a carrier material and one or more spherical porous silica particles embedded in said carrier material, wherein each spherical porous silica particle comprises spherical porous silica comprising a particulate metallic element.

The granular compositions described herein advantageously allow easy application of the composition for instance for the farmer or gardener. For instance, the present granular composition allows easy addition and/or mixing of the composition to the plant growth medium such as soil or compost. Such granular composition facilitates spreading the composition uniformly over the field. Furthermore, the present granular composition advantageously has an increased stability of its components such as the carrier material and the porous silica particle.

In certain embodiments, the porous silica particle is spherical.

In certain embodiments, the porous silica particle is embedded in a carrier material.

In certain embodiments, the porous silica or spherical porous silica comprises a zeolite.

In certain embodiments, the particulate metallic element is particulate silver.

In certain embodiments, the particulate metallic element is particulate metallic silver.

In certain embodiments, the porous silica or spherical porous silica comprises of from 1.0 % to 20.0 % by weight of particulate (metallic) silver, with % by weight compared with the total weight of the porous silica or spherical porous silica, preferably of from 5.0 to 15.0%.

In certain embodiments, the porous silica particle or granular composition is used to increase one or more of the weight of the plant, the length of the plant, the yield of the plant, the weight of the leaves, the number of the leaves, the length of the leaves, the yield of the leaves, the weight of the roots, the length of the roots, the number of roots, the diameter of the roots, the yield of the roots, and the length of the region of root hair growth of the plant.

In certain embodiments, the plant is a crop, preferably a vegetable crop.

In certain embodiments, the carrier material is a silicate, preferably an aluminosilicate, more preferably a zeolite.

In certain embodiments, the granular composition is spherical.

In certain embodiments, the spherical granular composition has a mean diameter of from 1 mm to 15 mm.

A further aspect relates to a plant growth medium comprising the granular composition. Such plant growth medium allows plant growth enhancement while at the same time allowing easy application for instance for the farmer or gardener.

A further aspect still relates to a process for preparing a granular composition comprising a carrier material and one or more spherical porous silica particles embedded in said carrier material, wherein each spherical porous silica particle comprises spherical porous silica comprising a particulate metallic element, the method comprising the steps of: (a) providing one or more spherical porous silica particles; (b) providing a carrier material; (c) mixing the one or more spherical porous silica particles and the carrier material, thereby obtaining a mixture comprising the one or more spherical porous silica particles embedded in the carrier material; and (d) molding said mixture, thereby obtaining said granular composition.

These and further aspects and embodiments of the invention are hereunder further explained in the following sections and in the claims, and illustrated by non-limiting figures. The reference numbers relate to the hereto-annexed figures.

### BRIEF DESCRIPTION OF THE FIGURES

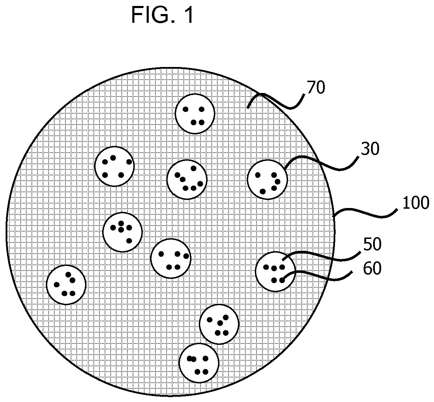

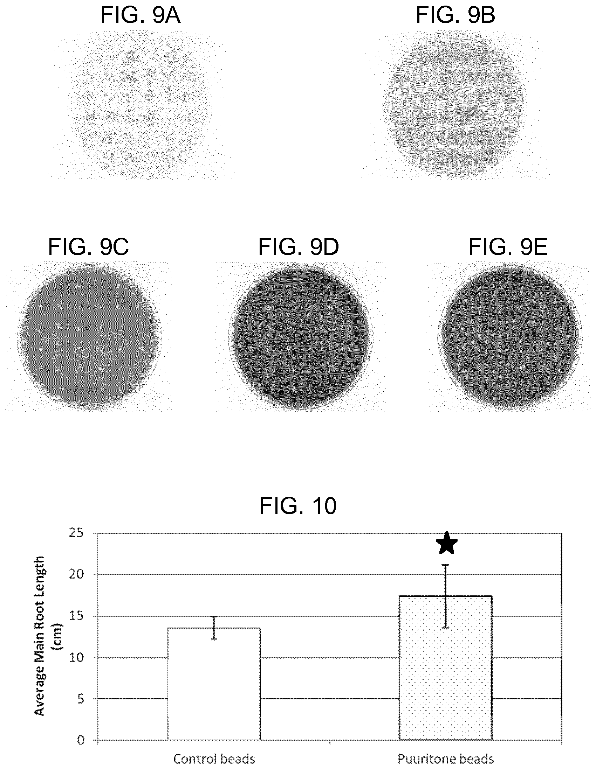

**FIG. 1** schematically illustrates a granular composition according to an embodiment of the invention.

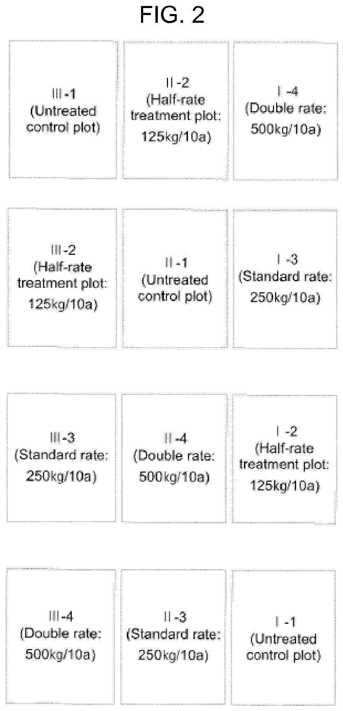

**FIG. 2** schematically illustrates the experimental plot layout for the field experiment.

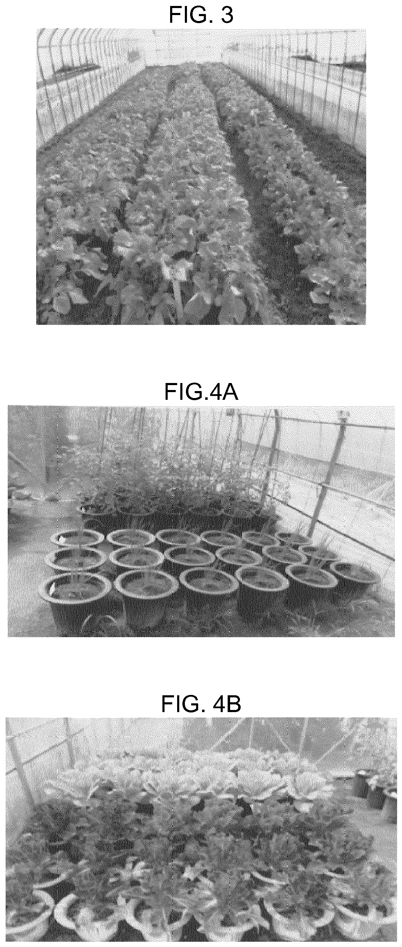

**FIG. 3** represents a photograph illustrating the growth condition of the Altari radish plants in the twelve different plots of the field experiment after basal application of a granular composition according to an embodiment of the present invention.
**FIG. 4A** represents a photograph illustrating the growth condition of green onion (in front) and tomato (in back) after basal application of a granular composition illustrating the present invention (Monzonite™). Six out of nine pots which received half rate treatment, standard rate treatment, or double rate treatment with the granular composition illustrating the present invention are shown from the front to the back.
**FIG.4B** represents a photograph illustrating the growth condition of lettuce (in front) and winter-grown cabbage (in back) after basal application of a granular composition illustrating the present invention (Monzonite™). Six out of nine pots which received half rate treatment, standard rate treatment, or double rate treatment with the granular composition illustrating the present invention are shown from the front to the back.

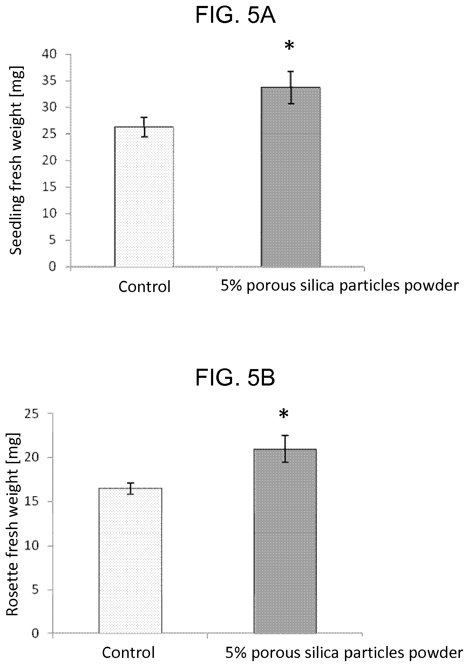

**FIG. 5A** represents a graph illustrating the effect of porous silica particles according to an embodiment of the present invention (in powder form) on fresh weight of 3-week-old *Arabidopsis* seedlings grown on vertical plates. Bars represent mean ± standard error of 30 individual seedlings. Statistically significant difference between control plants and plants grown on plant growth medium comprising porous silica particles is defined as p< 0.05 according to Student's t test (p = 0.03).
**FIG. 5B** represents a graph illustrating the effect of porous silica particles according to an embodiment of the present invention (in powder form) on fresh weight of 3-week-old *Arabidopsis* rosettes grown on horizontal plates. Bars represent mean ± standard error of 90 individual rosettes. Statistically significant difference between control plants and plants grown on plant growth medium comprising porous silica particles is defined as p< 0.05 according to Student's t test (p = 0.006).

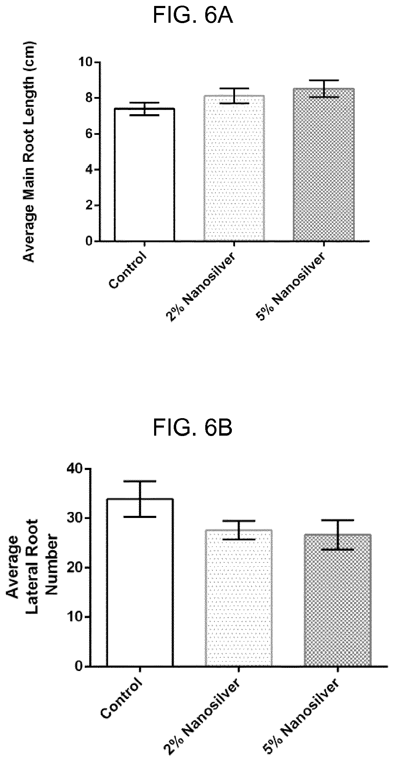

**FIG. 6A** represents a graph illustrating the effect of 2% and 5% by weight of porous silica particles according to an embodiment of the invention (referred to in the graph as "2% nanosilver" and "5% nanosilver" respectively) on main root length of *Arabidopsis thaliana* seedlings grown on vertical plates, with % by weight compared with the total weight of the agar composition (w/w). Bars represent mean ± standard error of 30 individual seedlings. Statistically significant difference between control plants and plants grown on plant growth medium comprising 2% by weight of porous silica particles was defined as p< 0.05 according to Student's t-test (p = 2.18 x 10⁻⁹). Statistically significant difference between control plants and plants grown on plant growth medium comprising 5% by weight of porous silica particles was defined as p< 0.05 according to Student's t-test (p = 3.5 x 10⁻¹⁴).
**FIG. 6B** represents a graph illustrating the effect of 2% and 5% by weight of porous silica particles according to an embodiment of the invention (referred to in the graph as "2% nanosilver" and "5% nanosilver" respectively) on number of lateral roots of *Arabidopsis thaliana* seedlings grown on vertical plates, with % by weight compared with the total weight of the agar composition (w/w). Bars represent mean ± standard error of 30 individual seedlings. Statistically significant difference between control plants and plants grown on plant growth medium comprising 2% by weight of porous silica particles was defined as p< 0.05, according to Student's t-test (p = 1.9 x 10⁻¹⁰). Statistically significant difference between control plants and plants grown on growth medium comprising 5% by weight of porous silica particles was defined as p< 0.05, according to Student's t-test (p = 2.3 x 10⁻¹¹).

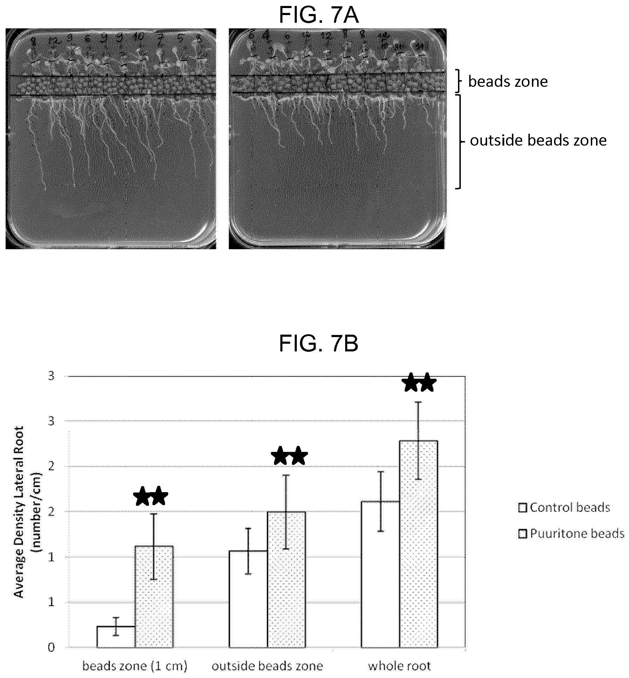

**FIG. 7A** represents photographs illustrating the growth of lateral roots of *Arabidopsis thaliana* plants grown on a plate with control beads in a 1 cm beads zone (left) or on a plate with a granular composition according to an embodiment of the invention in a 1 cm beads zone (right). The beads zone and outside beads zone are indicated.
**FIG. 7B** represents a graph illustrating the average density of lateral roots of *Arabidopsis thaliana* plants grown on plates with control beads (white bars) in a 1 cm zone or on plates with a granular composition according to an embodiment of the invention (Puuritone beads, dotted bars) in a 1 cm zone. Average density of lateral roots is presented as means of 30 individual seedlings ± standard deviation. Asterisks indicate statistically significant differences calculated according to Student's t test (** p<0.01).

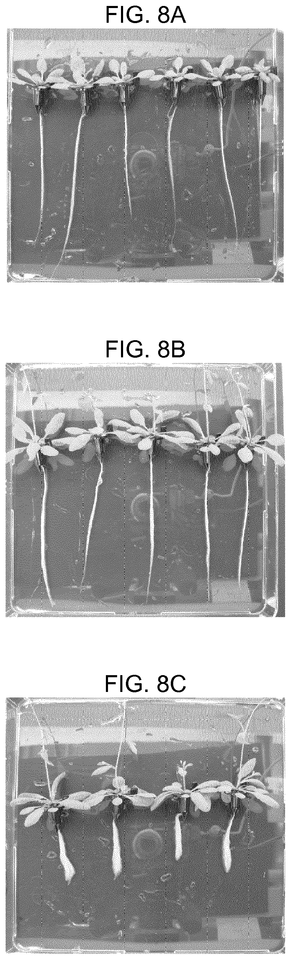

**FIG. 8A**, **FIG. 8B**, and **FIG. 8C** represent photographs illustrating *Arabidopsis thaliana* plants grown in a hydroponic system without beads (control), with a control granular composition (control beads), and with a granular composition according to an embodiment of the invention (Puuritone beads), respectively.
**FIG**. **9A**, **FIG**. **9B**, **FIG.** 9C, **FIG**. **9D**, and **FIG. 9E** represent photographs illustrating *Arabidopsis thaliana* plants grown horizontally on agar plates without porous silica particles, with 5 %, 10 %, 15 %, and 20 % by weight of porous silica particles according to an embodiment of the present invention, respectively (with % by weight compared with the total weight of the agar composition).
**FIG. 10** represents a graph illustrating the average main root length of maize plants (Zea *mays L*.) grown in a hydroponic system with a control granular composition (control beads, white bar) or with a granular composition according to an embodiment of the invention (Puuritone beads, dotted bar). Bars represent means of ten individual measurements ± standard deviation. Asterisks indicated statistically significant differences calculated according to Student's t test (* p<0.05).
**FIG. 11** represents a photograph of rice plant grown in a hydroponic system with a control granular composition (control beads, left) and a rice plant grown in a hydroponic system with a granular composition according to an embodiment of the invention (Puuritone beads, right).
**FIG. 12A** represents a heat map of the expression values of genes following long-term exposure of Arabidopsis plants to porous silica particles illustrating the present invention.
**FIG. 12B** represents a graph illustrating the principal component analysis of the expression values of genes following long-term exposure of Arabidopsis plants to porous silica particles illustrating the present invention.

### DETAILED DESCRIPTION OF THE INVENTION

It is to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "a nanoparticle" means one nanoparticle or more than one nanoparticle.

The terms "comprising", "comprises" and "comprised" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of". The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein. Throughout this application, the term "about" is used to indicate that a value includes the standard deviation of error for the device or method being employed to determine the value.

Throughout this specification and unless otherwise stated, the term "by weight" is used to indicate the weight of an element or compound in a composition compared with the total weight of the composition (w/w).

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

All references cited in the present specification are hereby incorporated by reference in their entirety. In particular, the teachings of all references herein specifically referred to are incorporated by reference.

According to a first aspect, the invention relates to the use of (a) porous silica particle(s) as a plant growth enhancer, wherein the porous silica particle(s) comprise(s) porous silica comprising a particulate metallic element. Further described herein is a method for enhancing plant growth comprising the step of growing a plant in a plant growth medium provided with (a) porous silica particle(s), said porous silica particle(s) comprising porous silica comprising a particulate metallic element. Further described herein is a method for enhancing plant growth comprising the step of growing a plant in the presence of (a) porous silica particle(s), said porous silica particle(s) comprise(s) porous silica comprising a particulate metallic element.

In an embodiment, the porous silica particle(s) comprise(s), consist(s) essentially of, or consists of porous silica and a particulate metallic element, wherein the porous silica incorporates the particulate metallic element. In an embodiment, the porous silica particle(s) comprise(s), consist(s) essentially of, or consist(s) of porous silica and a particulate metallic element, wherein the particulate metallic element is comprised in the porous silica. In an embodiment, the porous silica particle(s) comprise(s), consist(s) essentially of, or consist(s) of porous silica and a particulate metallic element, wherein the particulate metallic element is fixed to the porous silica. In an embodiment, the porous silica particle(s) comprise(s), consist(s) essentially of, or consist(s) of porous silica and a particulate metallic element, wherein the particulate metallic element is immobilized in and/or on the porous silica, preferably inside the silica pores as well as on the external surfaces of the porous silica.

In an embodiment, the invention relates to the use of porous silica comprising a particulate metallic element as a plant growth enhancer. Further described herein is a method for enhancing plant growth comprising the step of growing a plant in a plant growth medium provided with porous silica comprising a particulate metallic element. IFurther described herein is a method for enhancing plant growth comprising the step of growing a plant in the presence of porous silica comprising a particulate metallic element.

An embodiment relates to the use of porous silica as a plant growth enhancer, wherein the porous silica comprises particulate (metallic) silver. A further embodiment relates to the use of porous silica as a plant growth enhancer, wherein the porous silica incorporates particulate (metallic) silver.

According to a second aspect, the invention relates to the use of a granular composition as a plant growth enhancer, said granular composition comprising a carrier material and one or more porous silica particles embedded in said carrier material, wherein each porous silica particle comprises porous silica comprising a particulate metallic element. Further described herein is a method for enhancing plant growth comprising the step of growing a plant in a plant growth medium provided with a granular composition, said granular composition comprising a carrier material and one or more porous silica particles embedded in said carrier material, wherein each porous silica particle comprises spherical porous silica comprising a particulate metallic element. Further described herein is a method for enhancing plant growth comprising the step of growing a plant in the presence of a granular composition, said granular composition comprising a carrier material and one or more porous silica particles embedded in said carrier material, wherein each porous silica particle comprises spherical porous silica comprising a particulate metallic element.

In an embodiment, the granular composition comprises, consists essentially of, or consists of a carrier material and one or more porous silica particles embedded in said carrier material, wherein each porous silica particle comprises porous silica and a particulate metallic element, wherein the porous silica incorporates the particulate metallic element. In an embodiment, the granular composition comprises, consists essentially of, or consists of a carrier material and one or more porous silica particles embedded in said carrier material, wherein each porous silica particle comprises porous silica and a particulate metallic element, wherein the particulate metallic element is comprised in the porous silica. In an embodiment, the granular composition comprises, consists essentially of, or consists of a carrier material and one or more porous silica particles embedded in said carrier material, wherein each porous silica particle comprises porous silica and a particulate metallic element, wherein the particulate metallic element is fixed to the porous silica. In an embodiment, the granular composition comprises, consists essentially of, or consists of a carrier material and one or more porous silica particles embedded in said carrier material, wherein each porous silica particle comprises porous silica and a particulate metallic element, wherein the particulate metallic element is immobilized in and/or on the porous silica, preferably inside the silica pores as well as on the external surfaces of the porous silica.

An embodiment relates to the use of a granular composition as a plant growth enhancer, said granular composition comprising a carrier material and porous silica comprising a particulate metallic element. Further described herein is a method for enhancing plant growth comprising the step of growing a plant in a plant growth medium provided with a granular composition, said granular composition comprising a carrier material and porous silica comprising a particulate metallic element. Further described herein is a method for enhancing plant growth comprising the step of growing a plant in the presence of a granular composition, said granular composition comprising a carrier material and porous silica comprising a particulate metallic element.

According to the second aspect in particular, the invention relates to the use of a granular composition as a plant growth enhancer, said granular composition comprising a carrier material and one or more spherical porous silica particles embedded in said carrier material, wherein each spherical porous silica particle comprises spherical porous silica comprising a particulate metallic element. Further described herein is a method for enhancing plant growth comprising the step of growing a plant in a plant growth medium provided with a granular composition, said granular composition comprising a carrier material and one or more spherical porous silica particles embedded in said carrier material, wherein each spherical porous silica particle comprises spherical porous silica comprising a particulate metallic element. Further described herein is a method for enhancing plant growth comprising the step of growing a plant in the presence of a granular composition, said granular composition comprising a carrier material and one or more spherical porous silica particles embedded in said carrier material, wherein each spherical porous silica particle comprises spherical porous silica comprising a particulate metallic element.

An embodiment relates to the use of a granular composition as a plant growth enhancer, said granular composition comprising a carrier material and spherical porous silica comprising a particulate metallic element. Further described herein is a method for enhancing plant growth comprising the step of growing a plant in a plant growth medium provided with a granular composition, said granular composition comprising a carrier material and spherical porous silica comprising a particulate metallic element. Further described herein is a method for enhancing plant growth comprising the step of growing a plant in the presence of a granular composition, said granular composition comprising a carrier material and spherical porous silica comprising a particulate metallic element.

According to the first aspect of the invention, (a) porous silica particle(s) is (are) used to enhance or increase plant growth. According to a second aspect of the invention, a granular composition is used to enhance or increase plant growth.

As used herein, the recitations "enhance plant growth" or "plant growth enhancer" encompasses an increase in the weight, number, length, diameter and/or yield of the plant or any one or more parts of the plant.

The parts of the plant may be the leaves, roots, stem, seeds, fruits, or flowers.

The increase in plant growth may be compared with plants grown in untreated plant growth medium, i.e., plant growth medium not treated with the porous silica particles or granular composition as taught herein. The increase in plant growth may be compared with healthy plants grown in untreated plant growth medium, i.e., plant growth medium not treated with the porous silica particles or granular composition as taught herein. The term "healthy plant", as used herein, encompasses a plant without signs of a plant disease for instance caused by pathogens (infectious disease). Such signs of a plant disease may include poor growth conditions, blights, spots, curled leaves, *etc.* Organisms that cause infectious disease in plants include fungi, oomycetes, bacteria, viruses, viroids, virus-like organisms, phytoplasmas, protozoa, nematodes and parasitic plants.

In certain embodiments, enhancing plant growth comprises increasing one or more of the weight of the plant, the length of the plant, the yield of the plant, the weight of the leaves, the number of the leaves, the length of the leaves, the yield of the leaves, the weight of the roots, the length of the roots, the number of roots, the diameter of the roots, the yield of the roots, the length of the region of root hair growth of the plant, the weight of the stem, the length of the stem, the diameter of the stem, the yield of the stem, the weight of the seeds, the number of the seeds, the length of the seeds, the diameter of the seeds, the yield of the seeds, the weight of the fruits, the number of fruits, the length of the fruits, the diameter of the fruits, the yield of the fruits, the weight of the flowers, the number of flowers, the length of the flowers and the yield of the flowers.

Preferably, enhancing plant growth comprises increasing one or more of the weight of the plant, the length of the plant, the yield of the plant, the weight of the leaves, the number of the leaves, the length of the leaves, the yield of the leaves, the weight of the roots, the length of the roots, the number of roots, the diameter of the roots, the yield of the roots, and the length of the region of root hair growth of the plant.

For example, enhancing plant growth may comprise increasing one or more of the length of the main root, the weight of the main root, the number of root axes, the diameter of the main root, the yield of the main root, and the length of the region of root hair growth of the main root. For example, enhancing plant growth may comprise increasing one or more of the number of lateral roots, the density of the lateral roots, the weight of the lateral roots, the length of the lateral roots, the diameter of the lateral roots, and the yield of the lateral roots.

In an embodiment, the plant growth enhancement may comprise changing or altering the root architecture such as increasing the number of root axes, increasing the number of lateral roots, and/or increasing the density of the lateral roots. Such a change in root architecture of a plant may improve stress tolerance such as drought tolerance, and may lead to increased yield of the plant, for instance of a crop plant, under stress conditions such as drought conditions.

The "density of the lateral roots" as used herein refers to the number of lateral roots on a zone of the main root (such as part of the main root or the whole main root) divided by the length of the zone of the main root (such as said part of the main root or said whole main root). The density of the lateral roots may be suitable expressed as a number per cm.

For example, enhancing plant growth may comprise increasing one or more of the fresh weight of the plant, the fresh weight of the seedlings, the fresh weight of the leaves (such as rosette), the fresh weight of the shoots, and the tiller number.

The plant growth enhancement may be measured by techniques known the art.

The terms "enhancing plant growth" or "plant growth enhancement" may be used interchangeably herein.

The terms "enhance" or "increase" may be used interchangeably herein.

In certain embodiment, the enhancement of plant growth as defined above may be at least about 1% (about 1.01-fold), compared with (i.e., relative to) (healthy) plant growth in untreated plant growth medium. For example, the plant growth may be enhanced by at least about 2% (about 1.02-fold), at least about 3% (about 1.03-fold), at least about 4% (about 1.04-fold), at least about 5% (about 1.05-fold), at least about 6% (about 1.06-fold), at least about 7% (about 1.07-fold), at least about 8% (about 1.08-fold), at least about 9% (about 1.09-fold), at least about 10% (about 1.10-fold), at least about 11% (about 1.11-fold), at least about 12% (about 1.12-fold), at least about 13% (about 1.13-fold), at least about 14% (about 1.14-fold), at least about 15% (about 1.15-fold), at least about 20% (about 1.20-fold), at least about 25% (about 1.25-fold), at least about 30% (about 1.30-fold), at least about 35% (about 1.35-fold), at least about 40% (about 1.40-fold), at least about 45% (about 1.45-fold), at least about 50% (about 1.50-fold), at least about 60% (about 1.60-fold), at least about 70% (about 1.70-fold), at least about 80% (about 1.80-fold), at least about 90% (about 1.90-fold), at least about 100% (about 2.00-fold), at least about 150% (about 2.50-fold), at least about 200% (about 3.00-fold), at least about 250% (about 3.50-fold), at least about 300% (about 4.00-fold), at least about 350% (about 4.50-fold), at least about 400% (about 5.00-fold), at least about 450% (about 5.50-fold), at least about 500% (about 6.00-fold), at least about 600% (about 7.00-fold), or at least about 700% (about 8.00-fold), compared with (i.e., relative to) (healthy) plant growth in untreated plant growth medium.

In preferred embodiments, the plant growth increase may encompass plant growth increase which is independent from antifungal and/or antibacterial effects of porous silica particles comprising a particulate metallic element, in particular (metallic) silver.

The term "plant" as used herein is defined as known in the art.

In certain embodiments, the plant is a crop, preferably a vegetable crop.

The term "crop" generally refers to plants that are grown on a large scale for food, clothing, livestock fodder, fuel or for any other economic purpose such as for example for use as dyes, medicinal, and cosmetic use.

Non-limiting examples of commercially interesting crops include sugarcane, pumpkin, maize or corn, wheat, rice, sorghum, cassava, soybeans, hay, potatoes, ginseng, and cotton.

The term "vegetable" as used herein refers to an edible plant or part of a plant. The term "vegetable" includes many different parts of the plant such as the flower bud, seeds, leaves, leaf sheaths, buds, stem, stems of leaves, stem of shoots, tubers, whole-plant sprouts, roots, bulbs and fruits in the botanical sense, but used as vegetables.

Non-limiting examples of commercially interesting vegetable crops include broccoli, cauliflower, globe artichokes, capers, sweet corn (maize), peas, beans, kale, collard greens, spinach, arugula, beet greens, bok choy, chard, choi sum, turnip greens, endive, lettuce, mustard greens, watercress, garlic chives, gai Ian, leeks, Brussels sprouts, Kohlrabi, galangal, ginger, celery, rhubarb, cardoon, Chinese celery, asparagus, bamboo shoots, potatoes, Jerusalem artichokes, sweet potatoes, taro, yams, soybean (moyashi), mung beans, urad, alfalfa, carrots, parsnips, beets, radishes, rutabagas, turnips, burdocks, onions, shallots, garlic, tomatoes, cucumbers, squash, zucchinis, pumpkins, peppers, eggplant, tomatillos, christophene, okra, breadfruit, avocado, green beans, lentils, snow peas, soybean, and beetroot.

Preferably, the plant is radish such as Altari radish; tomato; onion such as green onion; lettuce or cabbage such as winter-grown cabbage.

In certain embodiments, the plant is an ornamental plant.

The term "ornamental plant" generally refers to plants that are grown for decorative purposes, as houseplants or for cut flowers.

Non-limiting examples of commercially interesting cut flowers include Aconitum, Aegopodium, Agastche, Ageratum, Alchemilla mollis (lady's-mantle), Alchemilla vulgaris (Lady's-Mantle), Allium spp. (alliums), Alstromeria, Amaryllis, Ammobium, Amsonia, Anthemis, Aquilegia, Artemesia, Aster novae-angliae (New England aster), Astilbe, Astrantia major (masterwort), Baptisia australis (blue false indigo), Begonia, Black-Eyed Susan, Blue Bells, Boltonia asteroides (boltonia), Brunnera macrophylla (Siberian bugloss), Buddleia, Butterclup, Calendula, Calla Lilies, Calliopsis, Camassia, Campanula, Carnations, Caryopteris, Celosia, Chrysanthemum x superbum (shasta daisy), Cimicifuga, Coreopsis, Cosmos, Daffodils, Daisy, Daylilies, Delphinium xbelladonna (belladonna delphinium), Dianthus, Dicentra eximia (Bleeding heart), Dictamnus albus (gas plant), Digitalis, Echinacea purpurea (purple coneflower), Echinops ritro (globe thistle), Eryngium amethystinum (amethyst sea holly), Eupatorium, Euphorbia, Filipendula, Forsythia, Foxflove, Gaillardia, Gaura, Geranium, Gladiolus, Gerber Daisy, Goldenrod, Gypsophila paniculata (baby's breath), Helenium autumnale (common sneezeweed), Heliopsishelianthoides (False Sunflower), Helleborus orientalis (Lenten Rose), Heuchera sanguinea (coral bells), Hosta, Hyacinth, Hydrangea, Hypericum, Impatiens, Iris spp. (irises), Kniphofia, Larkspur, Lavender, Lespedeza, Liatris spicata (spike gayfeather), Lilacs, Lilium hybrids (lilies), Lisianthus, Lupinus spp. (lupines), Lycoris, Lysimachia clethroides (Gooseneck Loosestrife), Lythrum, Marigold, Mertensia, Monarda didyma (bee balm), Muscari, Myosotis, Narcissus hybrids (daffodils), Nepeta x faassenii (catmint), Paeonia lactiflora (common garden peony), Pansy, Peonies, perovskia, Petunia, Phlox paniculata (garden phlox), Physostegia virginiana (obedient plant), Platycodon grandiflorus (balloon flower), Polemonium reptans(Creeping Jacob's Ladder), Polygonum, Polygonatum, Poppies, Rodgersia, Roses, Rudbeckia fulgida (orange coneflower), Ruta, Salvia x superba (violet sage), Scabiosa caucasica (pincushion flower), Sedum, Shasta, Snap Dragons, Solidago, Stachys byzantina (lamb's ears), Stokesia, Sunflowers, Sweet Peas, Telekia, Thalictrum, Thermopsis caroliniana (Carolina lupine), Tricyrtis, Tulips, Verbena, Veronica spicata (spike speedwell), Violets, Yarrow, Zinnia, and Zizia.

In a preferred embodiment, the plant is a cut flower selected from the group consisting of tulips, gerbera daisies, lilies, gladioli, iris, roses, snapdragons, delphinium, larkspur, orchids, and lisianthus.

According to the first aspect of the invention, a porous silica particle is used as a plant growth enhancer, wherein the porous silica particle comprises porous silica comprising a particulate metallic element.

The term "porous silica" generally refers to silica with engineered shape and dimensions. Using a porous silica (with engineered shape and dimensions) as a support for the particulate metallic element advantageously allows the plant growth enhancing effect of the particulate metallic element while avoiding migration of the particulate metallic element from the porous silica, for instance to the plant growth medium.

In an embodiment, the porous silica may be a mesoporous material, such as mesoporous silica. As used herein, the term "mesoporous material" refers to any porous material with a mean pore diameter of from 2.0 to 50.0 nm.

In an embodiment, the porous silica may be a microporous material, such as microporous silica. As used herein, the term "microporous material" refers to any porous material with a mean pore diameter of less than 2.0 nm, for example of from 0.5 nm to 2.0 nm. The BET pore size, surface area and/or pore volume can be measured with the ISO 9277:2010 standard.

In a preferred embodiment, the particulate metallic element may be particulate (metallic) silver.

Also described herein is a method for preparing porous silica comprising particulate metallic element, preferably particulate (metallic) silver, wherein the method may comprise the steps of:
(P100) adding a template to an aqueous alcohol solution to form a gel solution;
(P200) adding a metallic element source, preferably a silver source, to the gel solution;
(P300) adding a silica precursor to the gel solution to form porous silica comprising ionic metallic element, preferably ionic silver;
(P400) adding a reducing agent to the porous silica comprising ionic metallic element, preferably ionic silver, to form porous silica comprising particulate metallic element, preferably particulate (metallic) silver; and
(P500) removing the template and reducing agent from the porous silica comprising particulate metallic element, preferably particulate (metallic) silver.

Alternatively, the method for preparing porous silica comprising particulate metallic element, preferably particulate (metallic) silver may comprise the steps of:
(S100) adding a template to an aqueous alcohol solution and forming a gel solution;
(S200) adding a metallic element source, preferably a silver source, to the gel solution;
(S300) adding a reducing agent to the gel solution to form particulate metallic element, preferably particulate (metallic) silver;
(S400) adding a silica precursor to the gel solution to form porous silica comprising particulate metallic element, preferably particulate (metallic) silver; and
(S500) removing the template and reducing agent from the porous silica comprising particulate metallic element, preferably particulate (metallic) silver.

In an embodiment, the porous silica particle is spherical. In an embodiment, the porous silica comprises spherical silica particles. As used herein, the term "spherical" refers to any shape wherein any three perpendicular dimensions differ in no more than 50% from one another, for example, no more than 20%, for example, no more than 10%, preferably wherein any three perpendicular dimensions differ in no more than no more than 5% from one another. The terms "spherical silica" and "globular silica" will be used interchangeably in this description.

In a preferred embodiment, the porous silica comprises spherical mesoporous silica. The terms "spherical mesoporous silica", "silica nanoballs" and "SNBs" will be used interchangeably in this description.

Hence, also described herein is a method for preparing spherical mesoporous silica comprising particulate metallic element, preferably particulate (metallic) silver, wherein the method may comprise the steps of:
(PS100) adding a template to an aqueous alcohol solution to form a gel solution;
(PS200) adding a metallic element source, preferably a silver source, to the gel solution;
(PS300) adding a silica precursor to the gel solution to form spherical mesoporous silica comprising ionic metallic element, preferably ionic silver;
(PS400) adding a reducing agent to the spherical mesoporous silica comprising ionic metallic element, preferably ionic silver, to form spherical mesoporous silica comprising particulate metallic element, preferably particulate (metallic) silver; and
(PS500) removing the template and reducing agent from the spherical mesoporous silica comprising particulate metallic element, preferably particulate (metallic) silver.

Alternatively, the method for preparing spherical mesoporous silica comprising particulate metallic element, preferably particulate (metallic) silver may comprise the steps of:
(SS100) adding a template to an aqueous alcohol solution and forming a gel solution;
(SS200) adding a metallic element source, preferably a silver source, to the gel solution;
(SS300) adding a reducing agent to the gel solution to form particulate metallic element, preferably particulate (metallic) silver;
(SS400) adding a silica precursor to the gel solution to form spherical mesoporous silica comprising particulate metallic element, preferably particulate (metallic) silver; and
(SS500) removing the template and reducing agent from the spherical mesoporous silica comprising particulate metallic element, preferably particulate (metallic) silver.

In a preferred embodiment, the template is a C₁₋₁₆alkylamine, preferably a C₁₀₋₁₂alkylamine. In a preferred embodiment, the alcohol is selected from the group comprising ethanol, methanol, propanol, butanol and pentanol, preferably the alcohol is ethanol or methanol. In a preferred embodiment, the silica precursor is selected from the group comprising tetraethoxyorthosilicate (TEOS), tetramethoxyorthosilicate (TMOS), tetrapropoxyorthosilicate (TPOS), tetrabutoxyorthosilicate (TBOS), tetrapentoxyorthosilicate (TPEOS), tetra(methylethylketoxime)silane, vinyl oxime silane (VOS), phenyl tris(butanone oxime)silane (POS) and methyl oxime silane (MOS), preferably the silica precursor is TEOS or TMOS. In a preferred embodiment, the reducing agent is selected from the group comprising: NaBH₄, NH₂NH₂, NH₃, and H₂S, preferably the reducing agent is NaBH₄. Preferably, the metallic element source is a silver source, preferably a silver nitrate solution, for example a 5% silver nitrate solution. Further described herein is spherical mesoporous silica obtained by the above method.

In an embodiment, the porous silica comprises tubular silica particles. As used herein, the term "tubular" refers to any shape wherein one dimension is more than 2 times larger than any two dimensions perpendicular to it, for example wherein one dimension is more than 3 times larger, for example more than 4 times larger, for example more than 5 times larger, for example more than 10 times larger, for example more than 20 times larger than any two dimensions perpendicular to it, preferably wherein one dimension is more than 50 times larger than any two dimensions perpendicular to it.

In an embodiment, the porous silica comprises tubular mesoporous silica. As used herein, the terms "tubular mesoporous silica", "silica nanotubes" and "SNTs" will be used interchangeably in this description.

Also described herein is a method for preparing tubular mesoporous silica comprising particulate metallic element, preferably particulate (metallic) silver, wherein the method may comprise the steps of:
(PT100) adding a template to an aqueous alcohol solution to form a gel solution;
(PT200) adding a metallic element source, preferably a silver source, to the gel solution;
(PT300) adding a silica precursor to the gel solution to form tubular mesoporous silica comprising ionic metallic element, preferably ionic silver;
(PT400) adding a reducing agent to the tubular mesoporous silica comprising ionic metallic element, preferably ionic silver, to form tubular mesoporous silica comprising particulate metallic element, preferably particulate (metallic) silver; and
(PT500) removing the template and reducing agent from the tubular mesoporous silica comprising particulate metallic element, preferably particulate (metallic) silver.

Alternatively, the method for preparing tubular mesoporous silica comprising particulate metallic element, preferably particulate (metallic) silver may comprise the steps of:
(ST100) adding a template to an aqueous alcohol solution and forming a gel solution;
(ST200) adding a metallic element source, preferably a silver source to the gel solution;
(ST300) adding a reducing agent to the gel solution to form particulate metallic element, preferably particulate (metallic) silver;
(ST400) adding a silica precursor to the gel solution to form tubular mesoporous silica comprising particulate metallic element, preferably particulate (metallic) silver; and
(ST500) removing the template and reducing agent from the tubular mesoporous silica comprising particulate metallic element, preferably particulate (metallic) silver.

In a preferred embodiment, the template is selected from the group comprising glycyldodecylamide, 2-amino-N-dodecylacetateamide, 2-aminoheptaneamide, and 2-aminotetradecanamide, preferably the template is glycyldodecylamide. In a preferred embodiment, the alcohol is selected from the group comprising: ethanol, methanol, propanol, butanol and pentanol, preferably the alcohol is ethanol or methanol. In a preferred embodiment, the silica precursor is selected from the group comprising tetraethoxyorthosilicate (TEOS), tetramethoxyorthosilicate (TMOS), tetrapropoxyorthosilicate (TPOS), tetrabutoxyorthosilicate (TBOS), tetrapentoxyorthosilicate (TPEOS), tetra(methylethylketoxime)silane, vinyl oxime silane (VOS), phenyl tris(butanone oxime)silane (POS) and methyl oxime silane (MOS), preferably the silica precursor is TEOS or TMOS. In a preferred embodiment, the reducing agent is selected from the group comprising: NaBH₄, NH₂NH₂, NH₃, and H₂S, preferably the reducing agent is NaBH₄. Preferably the metallic element source is a silver source, preferably a silver nitrate solution, for example a 5% silver nitrate solution. Also described herein is tubular mesoporous silica obtained by the above method. In certain embodiments, the porous silica comprises a zeolite. In certain embodiments, the porous silica is a zeolite. Using a zeolite may at least partly improve the plant growth increasing effect of the porous silica particles or the granular compositions as taught herein. As used herein, the term "zeolites" refers to porous silicate and aluminosilicate materials. An overview of different zeolite topologies and zeolite types may be found in the "Atlas of Zeolite Framework types" by Ch. Baerlocher, W.M. Meier and D.H. Olson. The zeolite may be prepared by any conventionally known method of preparing a zeolite of a certain topology and Si:AI ratio.

Also described herein is a method for preparing a zeolite comprising particulate metallic element, preferably particulate silver, wherein the method comprises the steps of:
(PZ100) adding a template to an aqueous alcohol solution to form a gel solution;
(PZ200) adding a metallic element source, preferably a silver source, to the gel solution;
(PZ300) adding a silica precursor, and optionally an aluminum source, to the gel solution to form a zeolite comprising ionic metallic element, preferably ionic silver;
(PZ400) adding a reducing agent to the zeolite comprising ionic metallic element, preferably ionic silver to form a zeolite comprising particulate metallic element, preferably particulate (metallic) silver; and
(PZ500) removing the template and reducing agent from the zeolite comprising particulate metallic element, preferably particulate (metallic) silver.

Alternatively, the method for preparing a zeolite comprising particulate metallic element, preferably particulate (metallic) silver comprises the steps of:
(SZ100) adding a template to an aqueous alcohol solution and forming a gel solution;
(SZ200) adding a metallic element source, preferably a silver source to the gel solution;
(SZ300) adding a reducing agent to the gel solution to form particulate metallic element, preferably particulate (metallic) silver;
(SZ400) adding a silica precursor, and optionally an aluminum source, to the gel solution to form a zeolite comprising particulate metallic element, preferably particulate (metallic) silver; and
(SZ500) removing the template and reducing agent from the zeolite comprising particulate metallic element, preferably particulate (metallic) silver.

In a preferred embodiment, the template is specifically selected to obtain a certain zeolite topology. In a preferred embodiment, the alcohol is selected from the group comprising: ethanol, methanol, propanol, butanol and pentanol, preferably the alcohol is ethanol or methanol. In a preferred embodiment, the silica precursor is selected from the group comprising aqueous sodium silicate, colloidal silica sol, fume silica, tetraethoxyorthosilicate (TEOS), tetramethoxyorthosilicate (TMOS), tetrapropoxyorthosilicate (TPOS), tetrabutoxyorthosilicate (TBOS), tetrapentoxyorthosilicate (TPEOS), tetra(methylethylketoxime)silane, vinyl oxime silane (VOS), phenyl tris(butanone oxime)silane (POS) and methyl oxime silane (MOS). Preferably the silica precursor is selected from the group comprising: aqueous sodium silicate, colloidal silica sol, fume silica, tetraethoxyorthosilicate (TEOS), and TMOS. In a preferred embodiment, the reducing agent is selected from the group comprising: NaBH₄, NH₂NH₂, NH₃, and H₂S, preferably the reducing agent is NaBH₄. Preferably the metallic element source is a silver source, preferably a silver nitrate solution, for example a 5% silver nitrate solution. In an embodiment, the zeolite is a zeolite obtained by the above method. The zeolite may have any topology. In a preferred embodiment, the zeolite has the FAU topology or the LTA topology. Preferably, the zeolite is Zeolite X or Zeolite A.

In an alternative embodiment according to the invention, the porous silica is replaced by a zeotype material. As used herein, the term "zeotype material" refers to materials which have the same crystal structure (topology) as a zeolite, but a different chemical composition. Examples of zeotype materials can also be found in the "Atlas of Zeolite Framework types" by Ch. Baerlocher, W.M. Meier and D.H. Olson, and include for example porous aluminophosphates.

In an alternative embodiment according to the invention, the porous silica is replaced by a metal organic framework (MOF). As used herein, the term "metal organic framework" refers to crystalline porous structures comprising metal ions or clusters coordinated to (often rigid) organic molecules to form one-, two-, or three-dimensional structures. An example of a metal organic framework is MOF-5.

In certain embodiments, the porous silica particles may have a powder form. Such form may at least partly improve the plant growth increasing effect of the porous silica particles or granular compositions as taught herein. The term "powder form", as used herein, refers to material composed of very fine particles. In certain embodiments, the powder form of the porous silica particles, preferably spherical mesoporous silica particles, has a particle size with a mean diameter of from 1000 to 4000 nm, for example of from 1500 to 3500 nm, preferably the powder form of the porous silica particles has a particle size with a mean diameter of from 2000 to 3000 nm. The particle size can be measured with the ISO 13320:2009 standard.

In a preferred embodiment, the porous silica, preferably spherical mesoporous silica, has a particle size with a mean diameter of from 50 nm to 500 nm, preferably of from 100 to 400 nm, preferably of from 200 to 300 nm. In a preferred embodiment, the porous silica, preferably spherical mesoporous silica, agglomerates into larger agglomerates or granules, typically micrometer-sized agglomerates. Preferably, the agglomerates of porous silica, preferably spherical mesoporous silica, have a particle size with a mean diameter of from 1000 to 4000 nm, preferably of from 1500 to 3500 nm, preferably of from 2000 to 3000 nm. The particle size can be measured with the ISO 13320:2009 standard.

In a preferred embodiment, the porous silica, preferably spherical mesoporous silica, has a mean pore diameter of from 1.0 nm to 4.0 nm, preferably of from 1.5 nm to 3.5 nm, preferably of from 2.0 to 3.0 nm. The BET pore size, surface area and/or pore volume can be measured with the ISO 9277:2010 standard.

In a preferred embodiment, the porous silica, preferably spherical mesoporous silica, has a particle size with a mean diameter of from 50 nm to 500 nm, preferably of from 100 to 400 nm, preferably of from 200 to 300 nm and has a mean pore diameter of from 1.0 nm to 4.0 nm, preferably of from 1.5 nm to 3.5 nm, preferably of from 2.0 to 3.0 nm.

In a preferred embodiment, the porous silica, preferably spherical mesoporous silica, has a melting point of from 1500°C to 1900°C, preferably of from 1550°C to 1850°C, preferably of from 1600°C to 1800°C. The melting point can be measured with the ISO 3146 standard.

In a preferred embodiment, the porous silica, preferably spherical mesoporous silica, has a particle size with a mean diameter of from 50 nm to 500 nm, preferably of from 100 to 400 nm, preferably of from 200 to 300 nm and has a melting point of from 1500°C to 1900°C, preferably of from 1550°C to 1850°C, preferably of from 1600°C to 1800°C.

In a preferred embodiment, the porous silica, preferably spherical mesoporous silica, has a specific gravity of from 1500 kg/m³ to 4000 kg/m³, preferably of from 2000 kg/m³to 3500 kg/m³, for example of from 2500 kg/m³ to 3000 kg/m³. The specific gravity can be measured with the ISO 787-11 standard at 20°C.

In a preferred embodiment, the porous silica, preferably spherical mesoporous silica, has a particle size with a mean diameter of from 50 nm to 500 nm, preferably of from 100 to 400 nm, preferably of from 200 to 300 nm and has a specific gravity of from 1500 kg/m³ to 4000 kg/m³, preferably of from 2000 kg/m³to 3500 kg/m³, for example of from 2500 kg/m³ to 3000 kg/m³.

In a preferred embodiment, the porous silica, preferably spherical mesoporous silica, has a specific surface area of from 200 m²/g to 2000 m²/g, preferably of from 300 m²/g to 1500 m²/g, preferably of from 400 m²/g to 1000 m²/g. The BET pore size, surface area and/or pore volume can be measured with the ISO 9277:2010 standard.

In a preferred embodiment, the porous silica, preferably spherical mesoporous silica, has a particle size with a mean diameter of from 50 nm to 500 nm, preferably of from 100 to 400 nm, preferably of from 200 to 300 nm and has a specific surface area of from 200 m²/g to 2000 m²/g, preferably of from 300 m²/g to 1500 m²/g, preferably of from 400 m²/g to 1000 m²/g.

In a preferred embodiment, the porous silica, preferably spherical mesoporous silica, has a specific pore volume of from 0.65 cm³/g to 1.45 cm³/g, preferably of from 0.75 cm³/g to 1.35 cm³/g, preferably of from 0.85 cm³/g to 1.25 cm³/g. The BET pore size, surface area and/or pore volume can be measured with the ISO 9277:2010 standard.

In a preferred embodiment, the porous silica, preferably spherical mesoporous silica, has a particle size with a mean diameter of from 50 nm to 500 nm, preferably of from 100 to 400 nm, preferably of from 200 to 300 nm and has a specific pore volume of from 0.65 cm³/g to 1.45 cm³/g, preferably of from 0.75 cm³/g to 1.35 cm³/g, preferably of from 0.85 cm³/g to 1.25 cm³/g.

In an embodiment, the porous silica, preferably spherical mesoporous silica, incorporates a particulate metallic element, preferably particulate (metallic) silver. The particulate metallic element, preferably particulate (metallic) silver may be held within the silica pores. The particulate metallic element, preferably particulate (metallic) silver may also be held on the external surfaces of the porous silica. The particulate metallic element, preferably particulate (metallic) silver may be held inside the silica pores as well as on the external surfaces of the porous silica. In a preferred embodiment, the particulate metallic element, preferably particulate (metallic) silver, is encapsulated in the porous silica. In a preferred embodiment, the particulate metallic element, preferably particulate (metallic) silver, is dispersed, preferably uniformly dispersed, on the internal and external surfaces of the porous silica matrix.

The metallic element may be a noble metal. In an embodiment, the metallic element may be selected from the group consisting of ruthenium (Ru), rhodium (Rh), palladium (Pd), silver (Ag), osmium (Os), iridium (Ir), platinum (Pt), and gold (Au). In an embodiment, the metallic element may be a group 8 element (preferably selected from iron (Fe), ruthenium (Ru), or osmium(Os)), a group 9 element (preferably selected from cobalt (Co), rhodium (Rh), or iridium (Ir)), a group 10 element (preferably selected from nickel (Ni), palladium (Pd), or platinum (Pt)), or a group 11 element (preferably selected from copper (Cu), silver (Ag), or gold (Au)). In a preferred embodiment, the metallic element is a group 11 element selected from silver (Ag), copper (Cu), or gold (Au). In a preferred embodiment, the metallic element is silver (Ag).

As used herein, the term "particulate metallic element" refers to metallic particles; they may be noble metallic particles, preferably metallic silver (Ag⁰), copper (Cu⁰) or gold particles (Au⁰), preferably metallic silver particles (as opposed to silver ions, such as Ag⁺ and Ag²⁺). Such particulate metallic elements being in oxidation state zero advantageously prevent migration of the metallic element from the porous silica and prevent leaching of the metallic element into the growing medium.

The term "metallic" as used herein refers to metals with oxidation state zero.

Preferably, the metallic particles are metallic nanoparticles, preferably silver nanoparticles. As used herein, the term "nanoparticles" refers to particles with a size of from 0.1 to 100.0 nm, preferably of from 0.5 to 20.0 nm, preferably of from 1.0 to 5.0 nm. The size of the particulate metallic element, preferably silver nanoparticles, can be determined by Scanning Electron Microscope (SEM) or Transmission Electron Microscopy (TEM). In an embodiment, the particulate metallic elements, preferably silver nanoparticles, have no specific shape. The size may be regarded as the mean size. The size of the particle may be that across the maximum width. In a preferred embodiment, the metallic particles, preferably metallic silver particles, are not capped or coated. In an embodiment, the metallic particles, preferably metallic silver particles are not capped or coated with an organic group, for example, a group selected from alkyl, (substituted) amine, or thiolate.

In an embodiment, the particulate metallic element is immobilized in and/or on the porous silica, preferably inside the silica pores as well as on the external surfaces of the porous silica. In an embodiment, the particulate metallic element is fixed to the porous silica. In an embodiment, the porous silica particle is configured to keep the particulate metallic element immobilized in and/or on the porous silica, preferably inside the silica pores as well as on the external surfaces of the porous silica. In an embodiment, the porous silica particle is configured to keep the particulate metallic element fixed to the porous silica. In an embodiment, the porous silica is a support material for the particulate metallic element, which remains fixed to the support.

In an embodiment, the porous silica particle is configured to keep the particulate metallic element in the porous silica. In an embodiment, the porous silica particle is configured so as to prevent migration of the particulate metallic element from the porous silica. In an embodiment, the porous silica particle is configured so as to prevent depletion of the particulate metallic element from the porous silica particle. In a preferred embodiment, there is no migration of the metallic element (such as (metallic) silver) out of the porous silica matrix and, therefore, no depletion of the metallic element (such as (metallic) silver) during the plant growth enhancing action. Keeping the metallic element in the porous silica during plant growth advantageously preserves the plant growth enhancing function of the porous silica particle over a prolonged period of time such as during the entire growth period of the plant. Furthermore, keeping the metallic element in the porous silica during plant growth advantageously prevents leakage of the metallic element to the plant growth medium. Advantageously, the porous silica particles may be reused during subsequent generations of plant growth.

In an embodiment, the porous silica particle as taught herein may be reused during subsequent generations of plant growth. In an embodiment, the porous silica particles may have a prolonged or long-lasting plant growth enhancing effect. In an embodiment, the porous silica particles may have a plant growth enhancing effect lasting for at least two generations of plant growth. For example, the porous silica particles may have a plant growth enhancing effect lasting for at least three, at least four, at least five, or at least six generations of plant growth. In an embodiment, the porous silica particles may have a plant growth enhancing effect lasting for at least two generations of plant growth without substantial reduction of plant growth enhancing activity. In an embodiment, the porous silica particles may have a plant growth enhancing effect lasting for at least two generations of plant growth without growth damage to the plant and/or without damage to the growth medium.

The terms "generations of plant growth" or "rounds of plant growth" may be used interchangeably herein.

Preferably, the metallic particles, preferably (metallic) silver particles, are the product of the reduction of metallic ions, preferably silver ions, which may be obtained from a metallic salt, preferably a silver salt, for example from silver nitrate. Preferably, the reduction is performed by a reducing agent.

In a preferred embodiment of the uses or granular composition as taught herein, the porous silica, preferably spherical mesoporous silica, comprises of from 1.0% to 20.0% by weight of particulate metallic element, preferably particulate silver, with % by weight compared with the total weight of the porous silica, preferably of from 5.0 to 15.0%, preferably of from 8.0 to 12.0%, for example about 10.0%. For example, the porous silica (preferably spherical mesoporous silica) may comprise 2.0%, 3.0%, 4.0%, 5.0%, 6.0%, 7.0%, 8.0%, 9.0%, 10.0%, 11.0%, 12.0%, 13.0%, 14.0%, 15.0%, 16.0%, 17.0%, 18.0%, 19.0%, or 20.0% by weight of particulate metallic element (preferably particulate silver) with % by weight compared with the total weight of the porous silica. Such percentages of particulate (metallic) silver may at least partly improve the plant growth increasing effect of the porous silica particles or of the granular composition.

The wordings "the total weight of the porous silica" or "the weight of the porous silica", as used herein, refers to the sum of the weight of the porous silica plus the weight of the particulate metallic element, preferably particulate (metallic) silver.

In an embodiment, the porous silica particle, preferably spherical mesoporous silica particle, is embedded in a carrier material. As used herein, the term "embedded in" refers to a carrier material wherein the carrier material is impregnated with porous silica, as opposed to being coated. In an embodiment, the invention relates to the use of a carrier material comprising one or more spherical porous silica particles, preferably spherical mesoporous silica particles, comprising particulate metallic element, preferably particulate (metallic) silver as a plant growth enhancer.

As already mentioned above, a second aspect relates to the use of a granular composition as a plant growth enhancer, said granular composition comprising a carrier material and one or more porous silica particles embedded in said carrier material, wherein each porous silica particle comprises porous silica comprising particulate metallic element, preferably particulate (metallic) silver. In particular, said granular composition may comprise a carrier material and one or more spherical porous silica particles embedded in said carrier material, wherein each spherical porous silica particle comprises spherical porous silica comprising particulate metallic element, preferably particulate (metallic) silver.

A further aspect the present invention relates to a granular composition comprising a carrier material and one or more porous silica particles embedded in said carrier material, wherein each porous silica particle comprises porous silica comprising particulate metallic element, preferably particulate (metallic) silver. In particular, said granular composition may comprise a carrier material and one or more spherical porous silica particles embedded in said carrier material, wherein each spherical porous silica particle comprises spherical porous silica comprising particulate metallic element, preferably particulate (metallic) silver.

In certain embodiments of the uses and granular compositions as taught herein, the porous silica in the granular composition is configured to keep the particulate metallic element immobilized in and/or on the porous silica, preferably inside the silica pores as well as on the external surfaces of the porous silica. In certain embodiments, the porous silica in the granular composition is configured to keep the particulate metallic element fixed to the porous silica. Keeping the particulate metallic element immobilized or fixed to the porous silica during plant growth advantageously preserves the plant growth enhancing function of the porous silica particle over a prolonged period of time such as during the entire growth period of the plant or even during subsequent generations of plant growth. Furthermore, keeping the particulate metallic element in the porous silica during plant growth advantageously prevents leakage of the metallic element to the plant growth medium. Advantageously, the granular composition may be recycled and/or reused during subsequent generations of plant growth.

In certain embodiments, the granular composition as taught herein may be recycled. In certain embodiments, the granular composition as taught herein may be reused during subsequent generations of plant growth. In certain embodiments, the granular composition as taught herein may be recycled and reused during subsequent generations of plant growth. In certain embodiments, the granular composition may have a prolonged or long-lasting plant growth enhancing effect. In certain embodiments of the uses and granular compositions as taught herein, the granular composition as taught herein may have a plant growth enhancing effect lasting for at least two generations of plant growth. For example, the granular composition as taught herein may have a plant growth enhancing effect lasting for at least two generations of plant growth. For example, the granular composition as taught herein may have a plant growth enhancing effect lasting for at least three, at least four, or at least five generations of plant growth. In an embodiment, the granular composition as taught herein may have a plant growth enhancing effect lasting for at least two generations of plant growth without substantial reduction of plant growth enhancing activity. In an embodiment, the granular composition as taught herein may have a plant growth enhancing effect lasting for at least two generations of plant growth without growth damage to the plant and/or without damage to the growth medium.

The terms "granular composition", "particulate composition" or "granule" may be used interchangeably herein.

The porous silica particle including porous silica comprising particulate metallic elements is defined as described herein. The spherical porous silica particle including spherical porous silica comprising particulate metallic element is defined as described herein.

The term "carrier material", as used herein, refers to an inert material able to embed or incorporate the spherical porous silica particles. The carrier material may be a silicate, aluminosilicate, or a polymer.

In certain embodiments of the uses and granular compositions as taught herein, the carrier material may be a silicate such as an aluminosilicate. Preferably, the carrier material is a zeolite as defined herein.

In certain embodiments of the uses and granular compositions as taught herein, the granular composition may have any form which allows easy application of the composition to a plant growth medium. In certain embodiments, the granular composition may be spherical, cylindrical, conical, or may have the form of a cube, a cuboid, a pyramid or prism. Preferably, the granular composition is spherical. Such spherical granular composition advantageously allows easy application of the composition to a plant growth medium. Furthermore, such a spherical granular composition advantageously allows efficient mixing of the spherical granular composition with a plant growth medium such as soil or compost.

Also disclosed herein is a spherical granular composition or a ball comprising a carrier material and one or more spherical porous silica particles embedded in said carrier material, wherein each spherical porous silica particle comprises spherical porous silica comprising particulate (metallic) silver.

In certain embodiments of the uses and granular compositions as taught herein, the granular composition is spherical, wherein the granular composition or ball has a mean diameter of from 1 mm to 20 mm, for example of from 1 mm to 15 mm, preferably wherein the granular composition has a mean diameter of from 2 mm to 10 mm for example, from 2 to 5 mm, for example, wherein the granular composition has a mean diameter of 2 mm, 3 mm, 4 mm, or 5 mm. The mean diameter can be determined by visual means such as by use of a Vernier caliper.

A batch comprising multiple granules with a determined mean diameter may be prepared. In certain embodiments, the diameter of a granule in a batch may vary between 80% and 120% of the mean diameter of the granules in the batch. For example, the diameter of a granule in a batch may vary between 85% and 115% of the mean diameter of the granules in the batch. Preferably, the diameter of a granule in a batch varies between 90% and 110% of the mean diameter of the granules in the batch.

In certain embodiments of the uses and granular compositions as taught herein, the granular composition comprises of from 0.1% to 30.0% by weight of spherical porous silica, preferably spherical mesoporous silica. For example, the granular composition comprises of from 1.0% to 20.0% by weight of spherical porous silica, preferably spherical mesoporous silica. For example, the granular composition comprises of from 5.0% to 15.0% by weight of spherical porous silica, preferably spherical mesoporous silica. Preferably, the granular composition comprises 10.0% by weight of spherical porous silica, preferably spherical mesoporous silica.

In certain embodiments of the uses and granular compositions as taught herein, the granular composition comprises of from 70.0% to 99.9% by weight of carrier material, preferably zeolite. For example, the granular composition comprises of from 80.0% to 99.0% by weight of carrier material, preferably zeolite. For example, the granular composition comprises of from 85.0% to 95.0% by weight of carrier material, preferably zeolite. Preferably, the granular composition comprises 90.0% by weight of carrier material, preferably zeolite.

In certain embodiments of the uses and granular compositions as taught herein, the granular composition consists essentially of or consists of a carrier material and one or more spherical porous silica particles embedded in said carrier material, wherein each spherical porous silica particle comprises spherical porous silica comprising particulate (metallic) silver.

In certain embodiments of the uses and granular compositions as taught herein, the granular composition comprises of from 0.1% to 30.0% by weight of spherical porous silica, preferably spherical mesoporous silica, and of from 70.0% to 99.9% by weight of carrier material, preferably zeolite. For example, the granular composition comprises of from 1.0% to 20.0% by weight of spherical porous silica, preferably spherical mesoporous silica, and of from 80.0% to 99.0% by weight of carrier material, preferably zeolite. For example, the granular composition comprises of from 5.0% to 15.0% by weight of spherical porous silica, preferably spherical mesoporous silica, and of from 85.0% to 95.0% by weight of carrier material, preferably zeolite. Preferably, the granular composition comprises 10.0% by weight of spherical porous silica, preferably spherical mesoporous silica, and 90.0% by weight of carrier material, preferably zeolite.

In certain embodiments of the uses and granular compositions as taught herein, the granular composition may comprises one or more additional substances selected from phyllosilicates such as Illite or Bentonite; layered silicates such as Kaolin or White Kaolin; or calcium carbonate (CaCO₃). In certain embodiments, the additional substances such as Illite, Bentonite, Kaolin, White Kaolin, or calcium carbonate, may be used at from 1 to 50 parts by weight with respect to 100 parts by weight of carrier material, preferably zeolite.

Figure 1 schematically illustrates a granular composition according to an embodiment of the invention. The granular composition **100** comprising a carrier material **70** and one or more spherical porous silica particles **30** embedded in said carrier material **70**, wherein each spherical porous silica particle **30** comprises spherical porous silica **50** comprising particulate silver **60**. The granular composition may be spheroid. The carrier material **70** may incorporate the spherical porous silica particles in a random manner. The spherical porous silica particles **30** may comprise spherical porous silica **50** incorporating silver nanoparticles **60**.

A further aspect relates to a plant growth medium comprising the granular composition as taught herein.

The term "plant growth medium", as used herein, is defined as known in the art. The term plant growth medium encompasses any medium possible to support the growth of a plant both *in vitro* as *in vivo.* Examples of plant growth media include sand, natural earth, horticultural soils, and various soil-mimicking and/or soil-less plant culture substrates such as hydroponics, all of which are referred to herein as soil.

As mentioned herein, one aspect described herein relates to a method for enhancing plant growth comprising the step of growing a plant in a plant growth medium provided with a porous silica particle or granular composition as taught herein. In certain embodiments, the method may comprise the step of adding and optionally mixing from 5 to 25 parts of a porous silica particle or granular composition as taught herein to 100 parts plant growth medium such as soil. In certain embodiments, the method may comprise the step of mixing from 5 to 25 parts of the porous silica particle or granular composition as taught herein to 100 parts plant growth medium such as soil.

In an embodiment, a porous silica particle or granular composition as taught herein may be applied on a plant growth medium such as soil in an amount of 100 kg/10are to 1000 kg/10are of the plant growth medium such as soil. For example, a porous silica particle or granular composition as taught herein may be applied on a plant growth medium in an amount of 125 kg/10are to 500 kg/10are of the plant growth medium such as soil. Preferably, a porous silica particle or granular composition as taught herein may be applied on a plant growth medium in an amount of 250 kg/10are of the plant growth medium such as soil.

In certain embodiments, for instance when the plant growth medium is a soil-mimicking and/or soil-less plant culture substrate, for instance a liquid plant culture substrate such as water-based plant culture substrate (*e*.*g*. in hydroponics), the plant growth medium may comprise from 0.001% to 2.0% by weight of porous silica particles as taught herein, in particular in powder form, with % by weight compared with the total volume of the plant growth medium (w/v). For example, the plant growth medium may comprise from 0.01% to 1.0% by weight of porous silica particles as taught herein, in particular in powder form, for example, the plant growth medium may comprise from 0.01% to 0.50% by weight of porous silica particles as taught herein, in particular in powder form, for example, the plant growth medium may comprise from 0.02% to 0.40% by weight of porous silica particles as taught herein, in particular in powder form, for example, the plant growth medium may comprise from 0.02% to 0.20% by weight of porous silica particles as taught herein, in particular in powder form, preferably, the plant growth medium may comprise from 0.04% to 0.16% by weight of porous silica particles as taught herein, in particular in powder form, with % by weight compared with the total volume of the plant growth medium (w/v).

In certain embodiments, for instance when the plant growth medium is a soil-mimicking and/or soil-less plant culture substrate, for instance a liquid plant culture substrate such as water-based plant culture substrate (*e*.*g*. in hydroponics), the plant growth medium may comprise at least 0.10% by weight of a granular composition as taught herein, with % by weight compared with the total volume of the plant growth medium (w/v). For example, the plant growth medium may comprise at least 0.20% by weight of a granular composition as taught herein, for example, the plant growth medium may comprise at least 0.40% by weight of a granular composition as taught herein, for example, the plant growth medium may comprise at least 1.0% by weight of a granular composition as taught herein, for example, the plant growth medium may comprise at least 2.0% by weight of a granular composition as taught herein, with % by weight compared with the total volume of the plant growth medium (w/v). In certain further embodiments, the plant growth medium may comprise at most 35.0% by weight of a granular composition as taught herein, with % by weight compared with the total volume of the plant growth medium (w/v). For example, the plant growth medium may comprise at most 30.0% by weight of a granular composition as taught herein, for example, the plant growth medium may comprise at most 25.0% by weight of a granular composition as taught herein, for example, the plant growth medium may comprise at most 20.0% by weight of a granular composition as taught herein, for example, the plant growth medium may comprise at most 15.0% by weight of a granular composition as taught herein, for example, the plant growth medium may comprise at most 10.0% by weight of a granular composition as taught herein, such as at most 6.0%, at most 5.0%, or at most 4.0% by weight of a granular composition as taught herein, for example, the plant growth medium may comprise at most 2.0% by weight of a granular composition as taught herein, with % by weight compared with the total volume of the plant growth medium (w/v).

In certain embodiments, for instance when the plant growth medium is a soil-mimicking and/or soil-less plant culture substrate, for instance a liquid plant culture substrate such as water-based plant culture substrate (*e*.*g*. in hydroponics), the plant growth medium may comprise from 0.10% to 30.0% by weight of a granular composition as taught herein, with % by weight compared with the total volume of the plant growth medium (w/v). For example, the plant growth medium may comprise from 0.10% to 25.0% by weight of a granular composition as taught herein, for example, the plant growth medium may comprise from 0.10% to 20.0% by weight of a granular composition as taught herein, for example, the plant growth medium may comprise from 0.10% to 15.0% by weight of a granular composition as taught herein, for example, the plant growth medium may comprise from 0.10% to 10.0% by weight of a granular composition as taught herein, for example, the plant growth medium may comprise from 0.20% to 6.0% by weight of a granular composition as taught herein, for example, the plant growth medium may comprise from 0.20% to 4.0% by weight of a granular composition as taught herein, preferably, the plant growth medium may comprise from 0.40% to 2.0% by weight of a granular composition as taught herein, with % by weight compared with the total volume of the plant growth medium (w/v).

In an embodiment, a porous silica particle or granular composition as taught herein may be applied on or to a plant growth medium by broadcasting such as basal application or top dressing. In a preferred embodiment, a porous silica particle or granular composition as taught herein is applied on or to a plant growth medium by basal application.

The term "broadcasting", as used in agricultural sciences, generally refers to spreading compounds or compositions such as fertilizers uniformly all over the field.

The term "basal application", as used in agricultural sciences, generally refers to spreading compounds or compositions uniformly all over the field at sowing or planting. By basal application, the compounds or compositions are uniformly distributed over the entire field and are mixed with the plant growth medium such as the soil.

The term "top dressing", as used in agricultural sciences, generally refers to spreading compounds or compositions in closely sown crops like paddy and wheat, with the objective of supplying the compounds or compositions in readily available form to growing plants.

A further aspect relates to the use of porous silica particles as taught herein or a granular composition as taught herein as an additive to a fertilizer. Advantageously, the use of porous silica particles as taught herein or a granular composition as taught herein in combination with a fertilizer allows a plant growth enhancing effect which is over and above any enhancement of plant growth using the fertilizer alone.

The term "fertilizer" generally refers to any organic or inorganic material of natural or synthetic origin that is added to a plant growth medium (such as soil) to supply one or more plant nutrients essential to the growth of plants.

A further aspect relates to the use of porous silica particles as taught herein or a granular composition as taught herein as an additive to an antimicrobial agent. Advantageously, the use of porous silica particles as taught herein or a granular composition as taught herein in combination with an antimicrobial agent allows a plant growth enhancing effect which is over and above any enhancement of plant growth using the antimicrobial agent alone.

The term "antimicrobial agent" generally refers to any agent that kills microorganisms or inhibits their growth.

A further aspect relates to a process for preparing a granular composition as described herein, the method comprising the steps of: (a) providing one or more porous silica particles, each porous silica particle comprising porous silica comprising particulate (metallic) silver; (b) providing a carrier material; (c) mixing the one or more porous silica particles and the carrier material, thereby obtaining a mixture comprising the one or more spherical porous silica particles embedded in the carrier material, and (d) molding said mixture, thereby obtaining said granular composition. Preferably, a further aspect relates to a process for preparing a granular composition as described herein, the method comprising the steps of: (a) providing one or more spherical porous silica particles, each spherical porous silica particle comprising spherical porous silica comprising particulate (metallic) silver; (b) providing a carrier material; (c) mixing the one or more spherical porous silica particles and the carrier material, thereby obtaining a mixture comprising the one or more spherical porous silica particles embedded in the carrier material; and (d) molding said mixture, thereby obtaining said granular composition.

In a preferred embodiment, the carrier material is in the form of a powder or granulated material.

In an embodiment, the process for preparing a granular composition as taught herein may further comprise the step of grinding the granular composition in order to trim the roughness of the surface of the granular composition.

In an embodiment, the process for preparing a granular composition as taught herein may further comprise the step of drying the granular composition for instance at room temperature or higher temperatures such as in an oven. In a preferred embodiment, the process for preparing a granular composition as taught herein may further comprise the step of drying the granular composition at room temperature.

In an embodiment, the process for preparing a granular composition as taught herein may further comprise the step of curing the granular composition. In a further embodiment, the process for preparing a granular composition as taught herein may comprise the step of cooling down the cured granular composition. For instance, the process for preparing a granular composition as taught herein may comprise the steps of processing the granular composition at a temperature ranging of 800 °C to 1200°C, preferably, ranging of from 1000°C to 1100°C, and slowly cooling down the granular composition. The processing step may be performed during of from about 1 h to about 3 h, preferably during about 2h.

Hence, an embodiment relates to a process for preparing a granular composition as described herein, the method comprising the steps of: (a) providing one or more spherical porous silica particles, each spherical porous silica particle comprising spherical porous silica comprising particulate (metallic) silver; (b) providing a carrier material; (c) mixing the one or more spherical porous silica particles and the carrier material, thereby obtaining a mixture comprising the one or more spherical porous silica particles embedded in the carrier material; (d) molding said mixture, thereby obtaining said granular composition; (e) grinding said granular composition; and (f) curing said granular composition.

Non-limiting examples of the use of porous silica comprising particulate (metallic) silver as a plant growth enhancer is described below.

### EXAMPLES

### Example 1: Preparation of a granular composition exemplifying the present invention

A granular composition exemplifying the present invention consisting of spherical granules comprising 10% (w/w) of spherical porous silica comprising silver nanoparticles and 90% (w/w) of Zeolite X. The spherical porous silica comprised 10% by weight of silver nanoparticles compared with the weight of the porous silica. This granular composition is also referred to herein as "Monzonite™" or "Puuritone beads".

The manufacturing process of Monzonite™ comprised the steps of
- molding for instance by a rolling process with water spray in order to form balls comprising Zeolite X and spherical porous silica comprising silver nanoparticles;
- grinding in order to trim the roughness of the surface of the balls;
- drying for instance at room temperature or oven, preferably at room temperature; and
- curing for instance by slowly heating to 1000 to 1100°C for about 2 hours and then slowly cooling down.

### Example 2: Preparation of powdery porous silica comprising particulate silver for use of as a plant growth enhancer

A porous silica comprising particulate silver in powder form was prepared by using the following materials during the manufacturing process: laurylamine (Kao corporation), tetraethylorthosilicate (Dow corning), ethanol, distilled water, silver nitrate (Merck), NaBH₄ (Acros Organics).

An overview of the manufacturing process of a powder form of porous silica comprising particulate silver is given in Table 1.

**Table 1: An overview of the manufacturing process of a powder form of porous silica comprising particulate silver**

| Process | Raw material | Input | Remarks |
|---|---|---|---|
| DDA (Laurylamine) dilution | DDA | 500 - 600g | Dissolve for 3 ∼ 5 min. at 20 ∼ 30'C |
| | Ethanol | 5 -7 L | |
| Particle synthesis | H₂O(DIW) | 50 - 60 L | Input DIW for 5-10 min. with dissolving then dissolve for 30min with 400rpm, |
| Input AgNO₃ | AgNO₃ | 50 - 150 g | Input accordingly then dissolve for 30min. at room temperature |
| | H₂O(DIW) | 2 - 4 L | |
| TEOS (Tetraethylorthosilicate) | TEOS | 2.000 - 3.000 g | Input slowly with dissolving for 120min. at room temperature |
| Ag deoxidization | NaBH₄ | 40 - 50 g | Input NaBH₄slowly then dissolve for 40min, at room temperature |
| | H₂O(DIW) | 1 -2 L | |
| Additional dissolve | 20mim. Additional dissolve with 600 rpm | | |
| aging | time | 24hr | |
| | temperature | 25∼30°C | |
| Filter | Clean with 4 - 6 L water then clean with 2 - 4 L EtOH | | |
| Removing DDA(Laurylamine) | Ethanol | 5 - 7 L | Remove with dissolving |
| | temperature | 25 °C | |
| | dissolving Time | 30min | |
| Filter | Clean 3L after filter | | |
| Dry | temperature | 350°C | 2hrs |

Laurylamine was removed during the drying process. Water and ethanol were removed during drying and cleaning process. Small amount of NO₃⁻ ion, BH₄⁻ ion and Na⁺ ion were removed during drying and cleaning process. As a result, only SiO₂ and Ag remained.

### Example 3: Use of a granular composition illustrating the present invention in a field experiment with a vegetable crop

### Objective

The following example was performed in order to determine the effect of a granular composition illustrating the present invention on the growth of a vegetable crop grown in the field and in order to determine if the granular composition illustrating the present invention can be classified as an eco-friendly agricultural ingredient.

### Materials and methodology

The vegetable crop used in the field experiment was Altari radish. Altari radish was grown in a farmhouse. As indicated in Figure 2, the field was divided in plots by a randomized block design (RBD) method. In the field experiment, there were four treatment levels as specified below and the experiment was performed three times. The total area of the field was 60 m². The field was divided in twelve plots and treated as described below and shown in Figure 2. Each plot had an area size of 5 m².

The granular composition illustrating the present invention consisted of spherical granules comprising 10% (w/w) of spherical porous silica comprising silver nanoparticles and 90% (w/w) of Zeolite X. The spherical porous silica comprised 10% by weight of silver nanoparticles compared with the weight of the porous silica. This granular composition is also referred to herein as "Monzonite™".

At the outset of the experiment, the field was plowed with 1000 kg/10are of manure. Five days later, the field was divided in plots and 1.2 m x 3.6 m furrow was made per treatment plot. The granular composition illustrating the present invention was applied by basal application to the soil to uniformly distribute the fertilizer over the entire field. Basal application of the granular composition illustrating the present invention was performed in each treatment plot at 125 kg/10are (half-rate treatment plot), 250 kg/10are (standard rate treatment plot), and 500 kg/10are (double rate treatment plot) per untreated plot (control plot).

Five days later, Altari radish were sown in two rows with 30 cm x 12 cm plant spacing. A first thinning and weeding was conducted twenty days later; a second thinning and weeding was conducted twenty-five days after the first thinning. Five days after the second thinning, the crops were harvested and the growth and amount was inspected. Twenty species of Altari radish were harvested per treatment plot and were measured according to the guidelines for inspection below. Twenty average plants have been selected avoiding the upper limit and lower limit of the growth level.

The inspection guidelines include the inspection of the following items:
(A) Number of leaves: inspected number of leaves that are longer than 2 cm
(B) Leaf length (cm): length of the longest leaf after the first week of experiment
(C) Leaf weight (g): total weight of above-ground region including the number of leaves and leaf length
(D) Root length (cm): length from the root hair to the edible part
(E) Root diameter (cm): diameter of the widest part of the radish
(F) Region of root hair (cm): diameter of radish on the part were the leaf and the leaf stalk meet
(G) Root weight (g): root weight of the underground part
Statistics were run by classifying according to factors. Statistics were run to verify significance in each item.

### Results and observations

### Characteristics of Altari radish leaves after basal application of a granular composition illustrating the present invention

Table 2 shows crop growth inspection after basal application of the granular composition illustrating the present invention and cultivation of Altari radish which was the experimental crop.

The number of leaves in the untreated plot, which was the control plot, was 13.01 but it increased to an average of 13.56 in the plots treated with Monzonite™. Among the plots treated with Monzonite™, the standard rate treatment plot had the highest number of leaves at 13.81. The number of leaves was 13.78 and 13.09 in the double rate treatment plot and half-rate treatment plot, respectively (Table 2).

The leaf length was 56.61 cm in the untreated plot, which was the control plot, but it extended to 57.93 cm on average in the plots treated with Monzonite™. Among the plots treated with Monzonite™, leaves in the standard rate treatment plot were the longest at 58.75 cm (Table 2). The lengths of the leaves were 58.12 cm and 56.92 cm in the double rate treatment plot and the half-rate treatment plot, respectively (Table 2).

The leaf weight was 169.85 g in the untreated plot, which was the control plot, but its weight increased to 183.17 g on average in the plots treated with Monzonite™. Among the plots treated with Monzonite™, leaves in the standard rate treatment plot at 191.86 g were the heaviest (Table 2). The weights of the leaves were 185.24 g and 172.43 g in the double rate treatment plot and in the half-rate treatment plot, respectively (Table 2).

These observations indicated that the leaves of Altari radish grew better in the plot treated with Monzonite™ compared with the untreated control plot. Based on the application rate of Monzonite™, leaves grew most favorably in the standard rate treatment plot followed by the double rate treatment plot and the half rate treatment plot.

**Table 2: Characteristics of Altari radish leaves after basal application of a granular composition illustrating the present invention (Monzonite™)**

| **Classification** | **Number of leaves** | **Leaf length (cm)** | **Leaf weight (g)** |
|---|---|---|---|
| Control plot | 13.01 ^{b} | 56.61 ^{b} | 169.85 ^{b} |
| Half rate (125kg/10are) | 13.09 ^{b} | 56.92 ^{b} | 172.43 ^{b} |
| Standard rate (250kg/10are) | 13.81 ^{a} | 58.75 ^{a} | 191.86 ^{a} |
| Double rate (500kg/10are) | 13.78 ^{ab} | 58.12 ^{ab} | 185.24 ^{ab} |
| Mean | 13.42 | 57.60 | 179.84 |

| | | | |
|---|---|---|---|
| "a", "b", and "ab" indicate statistical treatment which is calculated by a program (Mystat, developed by Chungnam University in South Korea) based on the Duncan's multiple test; "a" is statistically the highest level of the growth condition, and down to "b", "c", *etc;* "ab" is the level in between "a" and "b". | | | |

### Characteristics of Altari radish roots after basal application of a granular composition illustrating the present invention

Table 3 shows characteristics of Altari radish roots after basal application of a granular composition illustrating the present invention and cultivation of Altari radish.

The root length in the untreated plot, which was the control plot, was 12.25 cm but it increased to an average of 12.68 cm in the plots treated with Monzonite™. Among the plots applied with Monzonite™, the plants in the standard rate treatment plot had the longest roots at 12.89 cm. The lengths of the roots were 12.81 cm and 12.35 cm in the double rate treatment plot and the half-rate treatment plot, respectively (Table 3).

The root diameter was 6.15 cm in the untreated plot, which was the control plot, but it extended to 6.74 cm on average in the plots treated with Monzonite™. Among the plots treated with Monzonite™, the diameter of the roots in the standard rate treatment plot was the widest at 7.04 cm (Table 3). The measurements of the diameter were 6.88 cm and 6.29 cm in the double rate treatment plot and the half-rate treatment plot, respectively (Table 3).

The diameter of the part where the root hair grows, which was the part where the above-ground leaves meet the leaf stalk, was 4.51 cm wide in the untreated plot, which was the control plot. It increased to 4.75 cm on average in the plots treated with Monzonite™. Among the plots treated with Monzonite™, the diameter of the plant in the standard rate treatment plot was the widest at 4.82 cm. It was followed by 4.80 cm and 4.63 cm in the double rate treatment plot and the half-rate treatment plot, respectively (Table 3).

The root weight was 211.25 g in the untreated plot, which was the control plot, but it increased to 238.69 g on average in the plots treated with Monzonite™. Among the plots treated with Monzonite™, roots in the standard rate treatment plot were the heaviest at 245.75 g. It was followed by 239.14 g and 231.18 g in the double rate treatment plot and the half-rate treatment plot, respectively (Table 3).

**Table 3: Characteristics of Altari radish roots after basal application of a granular composition illustrating the present invention (Monzonite™)**

| **Classification** | **Root length (cm)** | **Root diameter (cm)** | **Region of root hair (cm)** | **Root weight (g)** |
|---|---|---|---|---|
| Control plot | 12.25 ^{a} | 6.15 ^{a} | 4.51 ^{a} | 211.25 ^{a} |
| Half rate (125kg/10are) | 12.35 ^{a} | 6.29 ^{a} | 4.63 ^{a} | 231.18 ^{a} |
| Standard rate (250kg/10are) | 12.89 ^{a} | 7.04 ^{a} | 4.82 ^{a} | 245.75 ^{a} |
| Double rate (500kg/10are) | 12.81 ^{a} | 6.88 ^{ab} | 4.80 ^{a} | 239.14 ^{ab} |
| Mean | 12.57 | 6.59 | 4.69 | 231.83 |

| | | | | |
|---|---|---|---|---|
| "a", "b", and "ab" indicate statistical treatment which is calculated by a program (Mystat, developed by Chungnam University in South Korea) based on the Duncan's multiple test; "a" is statistically the highest level of the growth condition, and down to "b", "c", *etc;* "ab" is the level in between "a" and "b" | | | | |

Conclusively, these observations in the cultivation experiment of Altari radish indicated that the use of a granular composition illustrating the present invention (Monzonite™) resulted in improved characteristics of the leaves and roots of the crop compared with plants grown on untreated control plots. Among the plots treated with Monzonite™, growth rate was most significant in the standard rate (250 kg/10are) treatment plot followed by the double rate (500 kg/10are) treatment plot and the half rate (125 kg/10are) treatment plot. The results showed that the length, number and weight of leaves also affected the characteristics of Altari radish roots.

### Growth damage inspection after basal application of a granular composition illustrating the present invention

After a series of daily thorough inspection, it was found that basal application of Monzonite™ in all tested concentrations caused no fertilizer harm or adverse effects on the seeding and growth of Altari radish. Figure 3 illustrates the growth condition of the Altari radish plants in the twelve different plots of the field experiment after basal application of a granular composition illustrating the present invention (Monzonite™). The experimental plot layout of the field experiment is illustrated in Figure 2.

### Example 4: Use of a granular composition illustrating the present invention in a pot experiment with several vegetable crops

### Objective

The following example was performed in order to determine the effect of a granular composition illustrating the present invention on the growth of several vegetable crops grown in a pot and in order to determine if the granular composition illustrating the present invention can be classified as an eco-friendly agricultural ingredient.

### Materials and methodology

The vegetable crops used in the pot experiment were the following vegetable crops: tomato, green onion, winter-grown cabbage and lettuce. The crops were grown in a greenhouse. Each crop was grown in nine pots per application rate of the granular composition illustrating the present invention.

The granular composition illustrating the present invention consisted of spherical granules comprising 10% (w/w) of spherical porous silica comprising silver nanoparticles and 90% (w/w) of Zeolite X. The spherical porous silica comprised 10% by weight of silver nanoparticles compared with the weight of the porous silica. This granular composition is also referred to herein as "Monzonite™".

Basal application of the granular composition illustrating the present invention was performed five days prior to planting tomato, lettuce, winter-grown cabbage or green onion. Basal application of the granular composition illustrating the present invention was at 125 kg/10are (half-rate treatment plot), 250 kg/10are (standard rate treatment plot), and 500 kg/10are per untreated plot (control plot). The granular composition illustrating the present invention was applied by basal application to the soil to uniformly distribute and mix the composition over the entire pot. Thirteen days after planting, the crops were harvested and growth inspection was done.

The inspection was performed as follows:
Tomato:
   (A) Plant length (cm): length from the above-ground part to the tip of the longest leaf
   (B) Stem diameter (cm): diameter of the branch 10 cm from the above-ground part
   (C) Fresh weight (g): weight of above-ground part
Green onion:
   (A) Plant length (cm): length from the above-ground part to the tip of the longest leaf
   (B) Tiller number: number of tiller per week
   (C) Plant weight (g): fresh weight of the whole plant
Winter-grown cabbage:
   (A) Number of leaves: inspected the number of leaves that are longer than 2 cm
   (B) Leaf length (cm): length of the longest leaf after the first week of experiment
   (C) Leaf weight (g): total weight of above-ground part including the number of leaves and leaf length
Lettuce:
   (A) Number of leaves: inspected the number of leaves that are longer than 2 cm
   (B) Leaf length (cm): length of the longest leaf after the first week of experiment
   (C) Leaf weight (g): total weight of above-ground part including the number of leaves and leaf length
Statistics were run by classifying according to factors. Statistics were run to verify significance in each item.

### Results and observations

### Pot cultivation experiment: Tomato

Table 4 shows the results of the experiment for tomato seedlings planted and cultivated in nine pots per application rate (control, 125 kg/10a, 250 kg/10a, or 500 kg/10a) after basal application of Monzonite™ and harvested for growth inspection.

The tomato plant's length was 95.18 cm in the untreated plot, which was the control plot. It was longer in the plots treated with Monzonite™ (Table 4). The plant length was longer when the application rate of the granular composition illustrating the invention was higher; however, the difference in length was not significant between the standard rate and the double rate treatment plots (Table 4).

The stem diameter was 1.07 cm in the untreated plot, which was the control plot, but it increased in the plots treated with Monzonite™. Among the plots that had basal application of Monzonite™, the stem diameter in the double rate treatment plot was the highest with a diameter of 1.22 cm followed by 1.21 cm in the standard rate treatment plot (Table 4).

The fresh weight of the tomato plant was 1.68 kg on average in the plot with basal application of Monzonite™, while the fresh weight of the tomato plant was 1.20 kg in the untreated plot, which was the control plot. Among the plots that received basal application of Monzonite™, fresh weight of the plant was 1.79 kg in the double rate treatment plot, 1.75 kg in the standard rate treatment plot and 1.51 kg in the half rate treatment plot (Table 4).

The observations indicated that the plant length, stem diameter and fresh weight were improved in the plots that received basal application of Monzonite™, compared with those plants in the untreated control plot. The improvement of the plant length, stem diameter and fresh weight increased with higher application rate. However, the difference in growth enhancement between the standard rate and the double rate treatment plots was not significant. Thus, applying standard rate of the granular composition exemplifying the present invention advantageously allowed plant growth enhancement as good as applying a double rate of the granular composition exemplifying the present invention. The use of a standard rate of 250 kg/10are was economically a better choice for enhancing crop growth.

**Table 4: Growth of tomato plants based on basal application of a granular composition illustrating the present invention (Monzonite™)**

| **Classification** | **Plant length (cm)** | **Stem diameter (cm)** | **Fresh weight (kg)** |
|---|---|---|---|
| Control plot | 95.18 ^{b} | 1.07 ^{ab} | 1.20 ^{ab} |
| Half rate (125kg/10are) | 125.07 ^{ab} | 1.18 ^{a} | 1.51 ^{ab} |
| Standard rate (250kg/10are) | 135.17 ^{a} | 1.21 ^{a} | 1.75 ^{a} |
| Double rate (500kg/10are) | 137.04 ^{a} | 1.22 ^{a} | 1.79 ^{a} |
| Mean | 123.11 | 1.17 | 1.56 |

| | | | |
|---|---|---|---|
| "a", "b", and "ab" indicate statistical treatment which is calculated by a program (Mystat, developed by Chungnam University in South Korea) based on the Duncan's multiple test; "a" is statistically the highest level of the growth condition, and down to "b", "c", *etc*; "ab" is the level in between "a" and "b" | | | |

### Pot cultivation experiment: Green onion

Table 5 shows the results of the experiment for a green onion seedling planted and cultivated in nine pots per application rate after basal application of a granular composition illustrating the present invention (Monzonite™) and harvested for growth inspection.

The green onion's plant length was 15.49 cm in the untreated plot, which was the control plot. It was longer in the plots with basal application of Monzonite™. The plant length was longer when the application rate of the granular composition illustrating the invention increased; however, the difference in length was not significant between the standard rate treatment plots namely a plant length of 22.84 cm and the double rate treatment plots namely a plant length of 23.83 cm (Table 5).

The tiller number in the first week was 7.07 in the untreated control plot, and was 11.93 on average in the plots that had basal application of Monzonite™. Among the plots that had basal application of Monzonite™, the tiller number was 13.11 in the double rate treatment plot, 12.84 in the standard rate treatment plot and 9.85 in the half-rate treatment plot (Table 5).

The plant weight in the first week was 26.91 g in the untreated control plot, and 40.15 g on average in the plots that had basal application of Monzonite™. Among the plots with basal application of Monzonite™, the tiller number was 43.14 g in the double rate treatment plot, 40.25 g in the standard rate treatment plot and 37.07 g in the half rate treatment plot (Table 5).

These observations indicated that plant length, tiller number and plant weight were improved in the plots that received basal application of Monzonite™ compared with those plants planted in the untreated control plot. The green onion plants grew better with higher application rate of the granular composition illustrating the present invention.

**Table 5: Growth of green onion after basal application of a granular composition illustrating the present invention (Monzonite™)**

| **Classification** | **Plant length (cm)** | **Tiller number** | **Plant weight (g)** |
|---|---|---|---|
| Control plot | 15.49 ^{b} | 7.07 ^{b} | 26.91 ^{b} |
| Half rate (125kg/10are) | 19.08 ^{ab} | 9.85 ^{b} | 37.07 ^{b} |
| Standard rate (250kg/10are) | 22.84 ^{a} | 12.84 ^{a} | 40.25 ^{a} |
| Double rate (500kg/10are) | 23.83 ^{a} | 13.11 ^{a} | 43.14 ^{a} |
| Mean | 20.31 | 10.72 | 36.84 |

| | | | |
|---|---|---|---|
| "a", "b", and "ab" indicate statistical treatment which is calculated by a program (Mystat, developed by Chungnam University in South Korea) based on the Duncan's multiple test; "a" is statistically the highest level of the growth condition, and down to "b", "c", *etc;* "ab" is the level in between "a" and "b" | | | |

### Pot cultivation experiment: winter-grown cabbage

Table 6 shows the results of the experiment for winter-grown cabbage seedlings planted and cultivated in nine pots per application rate after basal application of a granular composition illustrating the present invention (Monzonite™) and harvested for growth inspection.

The number of leaves of winter-grown cabbage was 27.27 in the untreated control plot (Table 6). The number of leaves was higher at 30.07 on average in the plots that had basal application of Monzonite™. Among the plots with basal application of Monzonite™, the number of leaves in the double rate treatment plot was the highest at 30.95 followed by 30.25 in the standard rate treatment plot and 29.01 in the half rate treatment plot (Table 6).

The leaf length in the untreated control plot was 19.01 cm (Table 6). The leaf length of winter-grown cabbage was longer at 23.72 cm on average in the plots that received basal application of Monzonite™ (Table 6). Among the plots with basal application of Monzonite™, the leaves in the double rate treatment plot were the longest at 25.53 cm followed by 24.14 cm in the standard rate treatment plot and 21.84 cm in the half rate treatment plot (Table 5).

The leaf weight in the untreated control plot was 1.91 kg (Table 6). The leaf weight of winter-grown cabbage was increased at 2.68 kg on average in the plots that received basal application of Monzonite™ (Table 6) Among the plots with basal application of Monzonite™, the leaves in the double rate treatment plot were the heaviest at 3.03 kg followed by 2.91 kg in the standard rate treatment plot and 2.12 kg in the half rate treatment plot (Table 6).

These observations indicated that winter-grown cabbage grew better in the plots with basal application of Monzonite™ compared with the untreated control plot. Among the plots with basal application of Monzonite™, the improvement in the growth of winter-grown cabbage was highest in the double rate treatment plot followed by the standard rate treatment plot followed by the half rate treatment plot.

**Table 6: Growth of winter-grown cabbage after basal application a granular composition illustrating the present invention (Monzonite™)**

| **Classification** | **Number of leaves** | **Leaf length (cm)** | **Leaf weight (kg)** |
|---|---|---|---|
| Control plot | 27.27 ^{b} | 18.01 ^{b} | 1.91 ^{b} |
| Half rate (125kg/10are) | 29.01 ^{ab} | 21.48 ^{ab} | 2.12 ^{b} |
| Standard rate (250kg/10are) | 30.25 ^{a} | 24.14 ^{a} | 2.91 ^{a} |
| Double rate (500kg/10are) | 30.95 ^{a} | 25.53 ^{a} | 3.03 ^{a} |
| Mean | 29.37 | 22.29 | 2.49 |

| | | | |
|---|---|---|---|
| "a", "b", and "ab" indicate statistical treatment which is calculated by a program (Mystat, developed by Chungnam University in South Korea) based on the Duncan's multiple test; "a" is statistically the highest level of the growth condition, and down to "b", "c", *etc;* "ab" is the level in between "a" and "b" | | | |

### Pot cultivation experiment: lettuce

Table 7 shows the results of the experiment for lettuce seedlings planted and cultivated in nine pots per application rate after basal application of a granular composition illustrating the present invention (Monzonite™) and harvested for growth inspection.

The number of leaves of lettuce was 17.14 in the untreated control plot (Table 6). The number of leaves was increased at 23.42 on average in the plots that received basal application of Monzonite™ (Table 7). Among the plots with basal application of Monzonite™, the number of leaves in the double rate treatment plot was the highest at 25.95 followed by 24.47 in the standard rate treatment plot and 1984 in the half rate treatment plot (Table 7).

The leaf length of lettuce in the untreated control plot was 13.15 cm (Table 7). The leaf length of lettuce was increase at 17.32 cm on average in the plots that received basal application of Monzonite™ (Table 7). Among plots with basal application of Monzonite™, the leaves in the double rate treatment plot were the longest at 18.24 cm followed by 17.91 cm in the standard rate treatment plot and 15.81 cm in the half rate treatment plot (Table 7)

The leaf weight of lettuce in the untreated control plot was 255.95 g (Table 7). The leaf weight of lettuce was increased at 334.40 g on average in the plots with basal application of MonzoniteTM (Table 7). Among the plots with basal application of Monzonite™, the leaf weight of lettuce was the highest at 391.15 g in the double rate treatment plot followed by 337.21 g in the standard rate treatment plot and 301.84 g in the half rate treatment plot (Table 7).

The observations indicated that lettuce grew better in the plots that received basal application of Monzonite™ compared with the untreated control plot. Among the plots that had basal application of Monzonite™, the improvement in the growth of lettuce was highest in the double rate treatment plot followed by the standard rate treatment plot followed by the half rate treatment plot.

**Table 7: Growth of lettuce after basal application of a granular composition illustrating the present invention (Monzonite™)**

| **Classification** | **Number of leaves** | **Leaf length (cm)** | **Leaf weight (g)** |
|---|---|---|---|
| Control plot | 17.14 ^{b} | 13.15 ^{b} | 255.95 ^{b} |
| Half rate (125kg/10are) | 19.84 ^{b} | 15.81 ^{b} | 301.84 ^{b} |
| Standard rate (250kg/10are) | 24.47 ^{a} | 17.91 ^{a} | 337.21 ^{a} |
| Double rate (500kg/10are) | 25.95 ^{a} | 18.24 ^{a} | 391.15 ^{a} |
| Mean | 21.85 | 16.28 | 321.53 |

| | | | |
|---|---|---|---|
| "a", "b", and "ab" indicate statistical treatment which is calculated by a program (Mystat, developed by Chungnam University in South Korea) based on the Duncan's multiple test; "a" is statistically the highest level of the growth condition, and down to "b", "c", *etc;* "ab" is the level in between "a" and "b" | | | |

### Fertilizer harm test of pot cultivation experiment after basal application of a granular composition illustrating the present invention

Planting the seeds of the experimental vegetable crops, i.e., tomato, green onion, winter-grown cabbage and lettuce, after basal application of Monzonite™ on pots followed by daily inspection indicated no growth damage or fertilizer harm on crops under the application rates set for the experiment, as shown in Figures 4A and 4B. Figure 4A illustrates the growth condition of green onion (in front) and tomato (in back) after basal application of a granular composition illustrating the present invention (Monzonite™). Six out of nine pots which received half rate treatment, standard rate treatment, or double rate treatment with the granular composition illustrating the present invention are shown from the front to the back. Figure 4B illustrates the growth condition of lettuce (in front) and winter-grown cabbage (in back) after basal application of a granular composition illustrating the present invention (Monzonite™). Six out of nine pots which received half rate treatment, standard rate treatment or double rate treatment with the granular composition illustrating the present invention are shown from the front to the back.

### Conclusion

The above crop cultivation experiments based on basal application of a granular composition illustrating the present invention showed that the growth of crops, in particular vegetable crops, was enhanced in plots with basal application of the granular composition illustrating the present invention compared with the growth in untreated control plots. Using a granular composition illustrating the present invention at a standard rate treatment resulted in healthy growth in the vegetables, i.e. Altari radish, tomato, green onion, winter-grown cabbage and lettuce, both in a field and pot experiment.

The treatment with a granular composition illustrating the present invention at the application rates set for the experiment did not cause growth damage nor fertilizer harm when the vegetable crops, i.e. Altari radish, tomato, green onion, winter-grown cabbage and lettuce, were cultivated by basal application of the granular composition illustrating the present invention and given daily inspection.

### Example 5: Use of porous silicate particles illustrating the present invention as a plant growth enhancer

The following example is performed in order to assess the effect of porous silica particles illustrating the present invention, in particular in a powder form, on the growth of two model organisms used for studying plant biology, namely Arabidopsis and maize, in lab conditions. The plants are grown under *in vitro* conditions which allow to study the plant growth enhancing effect of the porous silica particles illustrating the present invention independent from the antifungal and/or antibacterial effects.

The model organisms which are tested are Arabidopsis and maize. The porous silica particles illustrating the present invention have a powder form. The porous silica particles are spherical porous silica particles comprising silver nanoparticles. The spherical porous silica comprises 10% by weight of silver nanoparticles compared with the weight of the porous silica.

Dose-response tests of the porous silica particles illustrating the present invention, in particular in powder form, on the growth of Arabidopsis are performed *in vitro* in agar conditions. Shoot and root phenotyping of Arabidopsis treated with the porous silica particles according to an embodiment of the invention, in particular in powder form, is performed *in vitro.* Dose-response toxicity tests of the porous silica particles according to an embodiment of the invention, in particular in powder form, are performed *in vitro* on Arabidopsis.

Initial tests for antifungal and/or antibacterial effects of the porous silica particles according to an embodiment of the present invention, in particular in powder form, on *in vitro* grown Arabidopsis are performed.

Shoot and root phenotyping of Maize treated with the porous silica particles illustrating the invention, in particular in powder form is performed *in vitro.* Dose-response toxicity tests of the porous silica particles illustrating the invention, in particular in powder form are performed *in vitro* on maize.

Dose-response toxicity tests of the porous silica particles according to an embodiment of the invention, in particular in powder form, are performed on rice seedlings *in vitro.*

The concentrations of porous silica particles illustrating the present invention include 5% by weight, 10% by weight, 15% by weight, or 20% by weight of porous silica particles, in particular in powder form, with % by weight compared with the total weight of the agar composition (w/w). In other words, the concentrations of porous silica particles illustrating the present invention in the growth medium include 0.04% by weight, 0.08% by weight, 0.12% by weight, or 0.16% by weight of porous silica particles, with % by weight compared with the total volume of the growth medium (w/v).

Molecular and biochemical effects of the porous silica particles illustrating the present invention, in particular in powder form, on plants, namely Arabidopsis and maize is studied by gene expression analysis and antioxidant profiling.

The experiments may allow to show the effects of porous silica particles illustrating the present invention, in particular in powder form, on the growth of roots and shoots in Arabidopsis, maize and/or rice independent from the antifungal and/or antibacterial effects.

The experiments may allow to elucidate the mode of action of porous silica particles illustrating the present invention, in particular in powder form, on plant growth and development, in particular, the experiments may allow to elucidate the mode of action of porous silica particles illustrating the present invention, in particular in powder form, on plant growth and development independent from the antifungal and/or antibacterial effects.

### Example 6: Use of a granular composition illustrating the present invention as a plant growth enhancer

The following example is performed in order to assess the effect of a granular composition illustrating the present invention on the growth of model organisms used for studying plant biology, namely Arabidopsis and maize, in greenhouse conditions.

The model organisms which are tested are Arabidopsis and maize. The granular composition illustrating the present invention consists of spherical granules comprising 10% of spherical porous silica comprising silver nanoparticles and 90% of Zeolite X. The spherical porous silica comprised 10% by weight of silver nanoparticles compared with the weight of the porous silica.

Shoot and root phenotyping of Arabidopsis grown in soil treated with a granular composition illustrating the present invention is performed.

Shoot and root phenotyping of maize grown in soil treated with a granular composition illustrating the present invention is performed.

Molecular and biochemical effects of the granular composition illustrating the present invention on Arabidopsis and maize are studied by gene expression analysis and antioxidant profiling.

The experiments may allow to show the effects of a granular composition illustrating the present invention on the growth of roots and shoots in Arabidopsis and/or maize.

The experiments may allow to elucidate the mode of action of a granular composition illustrating the present invention on plant growth and development.

### Example 7: Use of porous silica particles illustrating the present invention as a plant growth enhancer

The following experiments were performed in order to assess the effect of porous silica particles illustrating the present invention on growth of *Arabidopsis* under lab conditions. The plants were grown under *in vitro* conditions which allowed studying the plant growth enhancing effect of the porous silica particles illustrating the present invention independent from the antifungal and/or antibacterial effects.

The model organism was *Arabidopsis.* The porous silica particles illustrating the present invention are spherical porous silica particles comprising silver nanoparticles. The spherical porous silica comprised 10% by weight of metallic silver nanoparticles compared with the weight of the porous silica. The porous silica particles illustrating the present invention had a powder form.

### A. Effect on seedlings of Arabidopsis thaliana

### Growth of plants on vertical plates

*Arabidopsis thaliana* wild type Col0 seeds were surfaced-sterilized by using chlorine gas overnight and stratified at 4º C for 3 days. For non-treated controls, ten seeds were sown per each square petri dish (12x12 cm) containing 50 ml autoclaved full-strength Murashige and Skoog (MS) medium (1% sucrose, 0.8% agar, pH 5.7). A total of three plates were prepared. Plants were grown vertically under controlled environmental conditions (light/dark 16/8h, 21º C, light intensity 100 µmol m⁻²s⁻¹).

For plants treated with porous silica particles illustrating the present invention, plates were prepared as described above with the exception that the agar composition contained 5% by weight of porous silica particles illustrating the present invention, with % by weight compared with the total weight of the agar composition (w/w). In other words, the concentration of porous silica particles illustrating the present invention in the growth medium was 0.04% by weight, with % by weight compared with the total volume of the liquid growth medium before solidification (w/v). A total of three plates were prepared. Plants were grown for three weeks; individual seedlings were carefully removed, blotted on dry paper and weighed.

### Growth of plants on horizontal plates

*Arabidopsis thaliana* wild type Col0 seeds were surfaced-sterilized by using chlorine gas overnight and stratified at 4º C for 3 days. For non-treated controls, 32 seeds were sown per each petri dish (d=14 cm) containing 100 ml autoclaved full-strength Murashige and Skoog (MS) medium (1% Sucrose, 0.8% Agar, pH 5.7). A total of three plates were prepared. Plants were grown horizontally under controlled environmental conditions (light/dark 16/8h, 21º C, light intensity 100 µmol m⁻²s⁻¹).

For plants treated with porous silica particles illustrating the present invention, plates were prepared as described above with the exception that the agar composition contained 5% by weight of porous silica particles in powder form, with % by weight compared with the total weight of the agar composition (w/w). In other words, the concentration of porous silica particles illustrating the present invention in the growth medium was 0.04% by weight, with % by weight compared with the total volume of the liquid growth medium before solidification (w/v). A total of three plates were prepared. Plants were grown for three weeks; individual rosettes were cut and weighed.

### Results

No toxicity was observed for plants grown on plates comprising 5% by weight of porous silica particles according to an embodiment of the invention, with % by weight compared with the total weight of the agar composition (w/w). Plants grown on plates comprising 5% by weight of porous silica particles according to an embodiment of the invention, did not show any signs of growth damage.

The fresh weight of 3-week-old *Arabidopsis thaliana* seedlings grown on vertical plates was significantly higher in plants grown on plates comprising porous silica particles according to an embodiment of the present invention compared with plants grown on control plates (Figure 5A and Table 8). Statistically significant difference between the plants grown on plant growth medium comprising 5% by weight of porous silica particles according to an embodiment of the invention and control plants was defined as p< 0.05, according to Student's t-test (p = 0.03).

**Table 8: Seedling fresh weight (mg) of 3-week-old Arabidopsis thaliana seedlings grown on vertical plates (control plates and plates comprising porous silica particles illustrating the present invention).**

| **Seedling Fresh Weight (mg)** | **Control (*n* = *30*)** | **Porous silica particles (*n* = *30*)** |
|---|---|---|
| Average | 26.29 | 33.72 |
| Standard error | 1.79 | 2.97 |

The fresh weight of 3-week-old *Arabidopsis thaliana* rosettes grown on horizontal plates was significantly higher in plants grown on plates comprising porous silica particles according to an embodiment of the present invention compared with plants grown on control plates (Figure 5B and Table 9). Statistically significant difference between the porous silica particles-treated and control plants was defined as p< 0.05, according to Student's t-test (p = 0.006).

**Table 9: Rosette fresh weight (mg) of 3-week-old Arabidopsis thaliana rosettes grown on horizontal plates (control plates and plates treated with porous silica particles illustrating the present invention).**

| **Rosette Fresh Weight (mg)** | **Control (*n* = *90*)** | **Porous silica particles (*n* = *90*)** |
|---|---|---|
| **Average** | 16.47 | 20.97 |
| **Standard error** | 0.66 | 1.49 |

These results showed the growth enhancing effect of porous silica particles according to an embodiment of the present invention, in particular in powder form, on seedling fresh weight and rosette fresh weight in *Arabidopsis* independent from the antifungal and/or antibacterial effects of porous silica particles.

### B. Effect on root growth of Arabidopsis thaliana

### Growth of plants on vertical plates

*Arabidopsis thaliana* wild type (ecotype Columbia) seeds were sterilized and sown in square Petri-dishes (12x12 cm) on 50 ml nutrient agar medium ½ MS. Plates were oriented vertically and plants were grown under controlled environmental conditions (continuous light, 22ºC). Two days old seedlings with comparable root length were selected and transferred to square Petri-dishes (12x12 cm) containing 50 ml autoclaved ½ MS medium (0.8% agar) (control), or for treatment with porous silica particles illustrating the present invention, transferred to square plates prepared as described above with the exception that the agar composition contained 2% or 5% by weight of porous silica particles illustrating the present invention, with % by weight compared with the total weight of the agar composition (w/w). In other words, the concentration of porous silica particles in the growth medium was 0.016% or 0.04% by weight, with % by weight compared with the total volume of the liquid growth medium (before solidification) (w/v). Plates were placed vertically (same conditions, continuous light and 22ºC). Seven days after transfer the lateral roots were counted and the plates were scanned. Root lengths were measured by using Image J software program.

### Results

No toxicity was observed for plants grown on plates comprising 2% by weight or 5% by weight of porous silica particles according to an embodiment of the invention, with % by weight compared with the total weight of the agar composition (w/w). Plants grown on plates comprising 2% by weight or 5% by weight of porous silica particles according to an embodiment of the invention, did not show any signs of growth damage.

The main root length of *Arabidopsis thaliana* grown on vertical plates was significantly higher in plants grown on plates comprising 2% by weight and 5% by weight of porous silica particles according to an embodiment of the present invention compared with plants grown on control plates (Figure 6A), with % by weight compared with the total weight of the agar composition. Statistically significant difference between control plants and plants grown on growth medium comprising 2% by weight of porous silica particles illustrating the present invention was defined as p< 0.05, according to Student's t-test (p = 2.18 x 10⁻⁹). Statistically significant difference between control plants and plants grown on growth medium comprising 5% by weight of porous silica particles illustrating the present invention was defined as p< 0.05, according to Student's t-test (p = 3.5 x 10⁻¹⁴).

The number of lateral roots of *Arabidopsis thaliana* grown on vertical plates was significantly lower in plants grown on plates comprising 2% and 5% by weight of porous silica particles according to an embodiment of the present invention compared with plants grown on control plates (Figure 6B), with % by weight compared with the total weight of the agar composition. Statistically significant difference between control plants and plants grown on plant growth medium comprising 2% by weight of porous silica particles illustrating the present invention was defined as p< 0.05, according to Student's t-test (p = 1.9 x 10⁻¹⁰). Statistically significant difference between control plants and plants grown on plant growth medium comprising 5% by weight of porous silica particles illustrating the present invention was defined as p< 0.05, according to Student's t-test (p = 2.3 x 10-¹¹).

These results showed the growth enhancing effect of porous silica particles according to an embodiment of the present invention, in particular in powder form, on main root length of *Arabidopsis* independent from the antifungal and/or antibacterial effects of porous silica particles. These results also showed a reduction in the number of lateral roots of *Arabidopsis thaliana* grown on plant growth medium comprising porous silica particles according to an embodiment of the present invention, in particular in powder form. These observations may reflect a process called 'apical dominance' wherein the main root gains control over the development of new lateral roots. The elongation of the main root may be seen as a strategy of the plant to reach deeper in the soil and secure scarce resources such as water and nutrients, which is advantageous for further plant growth.

### C. Conclusion

The results show the plant growth enhancing effect of porous silica particles according to an embodiment of the present invention, in particular in powder form, on *Arabidopsis thaliana* independent from the antifungal and/or antibacterial effects of the porous silica particles.

### Example 8: Dose-response toxicity tests and use of a granular composition illustrating the present invention as a plant growth enhancer in a hydroponics system

*Arabidopsis thaliana* wild type (ecotype Columbia 0) seeds are sterilized and sown in a hydroponic system (Araponics, Belgium). Plants are grown under controlled environmental conditions (light/dark 16/8h, 21° C, light intensity 100 µmol m⁻²s⁻¹) on a nutrient solution containing micro and macro elements (GHE, France). To explore the effects of a granular composition according to an embodiment of the present invention (Monzonite™), a granular composition illustrating the present invention is added directly to the nutrient solution to a concentration of 250 g/l. The granular composition illustrating the present invention consists of spherical granules comprising 10% (w/w) of spherical porous silica comprising metallic silver nanoparticles and 90% (w/w) of Zeolite X. The spherical porous silica comprises 10% by weight of metallic silver nanoparticles compared with the weight of the porous silica. A granular composition consisting of Zeolite X serves as a control and is added to the nutrient solution to a concentration of 250 g/l. Pure nutrient solution is used as an additional control. Eighteen plants are sown per condition. Fresh weight is recorded three weeks following germination.

Ten sterilized maize kernels are distributed with the radicle pointing downwards on absorbing paper (Scott Rollwipe 6681) at about 2 cm from the top, with an interspace of 7-10 cm. The absorbing paper is then rolled so that the kernels stay in place. The paper roll is put in a glass tube (d = 5 cm, h = 23 cm) filled with 300 ml distilled water. The paper roll approximately sits at the bottom of the tube. The top of the paper roll reaches approximately the rim of the tube. This allows a large part of the liquid to be taken up by the paper. A granular composition according to an embodiment of the present invention (Monzonite™) is placed at the bottom of the tube (66 g per glass tube) in order to explore its effects. The granular composition according to an embodiment of the present invention consists of spherical granules comprising 10% (w/w) of spherical porous silica comprising metallic silver nanoparticles and 90% (w/w) of Zeolite X. The spherical porous silica comprises 10% by weight of metallic silver nanoparticles compared with the weight of the porous silica. A granular composition consisting of Zeolite X (66 g per glass tube) serves as a control. Glass tubes without granular composition are used as additional controls. Four tubes are prepared per condition and transferred to a growth cabinet with controlled environmental conditions (28 ºC, continuous light, 70 % relative humidity). Fresh weight is recorded at the end of the experiment.

### Example 9: Prolonged plant growth enhancing effect of a granular composition according to an embodiment of the present invention

Maize seedlings are germinated and grown under greenhouse conditions in pots filled with potting mixture containing different amounts of a granular composition according to an embodiment of the present invention (Monzonite™). The granular composition according to an embodiment of the present invention consists of spherical granules comprising 10% (w/w) of spherical porous silica comprising metallic silver nanoparticles and 90% (w/w) of Zeolite X. The spherical porous silica comprises 10% by weight of metallic silver nanoparticles compared with the weight of the porous silica. Control plants are grown in potting mixture containing the same amounts of a control granular composition consisting of Zeolite X. Plants grown in potting mixture without granular composition are used as additional controls. Plants are regularly watered until they have reached maturity. Different growth characteristics are monitored throughout the life cycle and the final yield is compared between the different treatments. At the end of the life cycle, the granular composition according to an embodiment of the present invention and the control granular composition are recuperated from the potting mixture and reused in a second round of experiments under identical conditions.

The experiment may show that a granular composition illustrating the present invention may have a prolonged plant growth enhancing effect lasting for at least two generations of crop growth of economically important cash crops such as maize or corn. Advantageously, a granular composition illustrating the present invention may have such prolonged plant growth enhancing effect without growth damage or damage to the growth medium.

### Example 10: Use of a granular composition illustrating the present invention as a plant growth enhancer

The following experiments were performed in order to assess the effect of a granular composition exemplifying the present invention on growth of *Arabidopsis* under lab conditions. The plants were grown under *in vitro* conditions which allowed studying the plant growth enhancing effect of the granular composition illustrating the present invention independent from the antifungal and/or antibacterial effects.

The model organism was *Arabidopsis*. The granular composition illustrating the present invention consisted of 10% (w/w) spherical porous silica comprising metallic silver nanoparticles and 90% (w/w) of Zeolite X. The granular composition illustrating the invention is also referred to herein as Puuritone beads. The spherical porous silica comprised 10% by weight of metallic silver nanoparticles compared with the total weight of the spherical porous silica. A granular composition consisting of Zeolite X served as a control. The control granular composition is also referred to herein as control beads.

### A. Materials and Methods

*Arabidopsis thaliana* wild type ColO seeds were surfaced-sterilized using chlorine gas overnight and stratified at 4º C for 3 days. Square petri dishes (12x12cm) containing 50 ml autoclaved full-strength Murashige and Skoog (MS) medium (1% Sucrose, 0.8% Agar, pH 5.7) were prepared. Control plates were prepared by placing control beads in a 1 cm zone through which roots were forced to grow. Plates with the granular composition illustrating the invention had an identical 1 cm zone with Puuritone beads. Ten seeds were sown per each plate and plants were grown vertically under controlled environmental conditions (light/dark 16/8h, 21º C, light intensity 100 µmol m⁻² s⁻¹). Lateral root numbers were counted in and outside the beads zone (Figure 7A). The length of the main root was measured in and outside the beads zone (Figure 7A).

The density of lateral roots (expressed in number/cm) in the beads zone refers to the number of lateral roots in the beads zone divided by the length of the main root in the beads zone (which is about 1 cm).

The density of lateral roots (expressed in number/cm) outside the beads zone refers to the number of lateral roots outside the beads zone divided by the length of the main root outside the beads zone.

The density of lateral roots (expressed in number/cm) in the whole root refers to the number of lateral roots on the whole main root divided by the length of the whole main root.

### B Results

Forcing the roots of Arabidopsis seedlings to grow through a zone with a granular composition according to an embodiment of the present invention significantly increased lateral root density. The effect was much more pronounced in the root section in the 1 cm beads zone, but was also observed outside the beads zone (Figure 7B). In general, the lateral root density of the whole root was increased by contact with the granular composition illustrating the invention (Figure 7B).

### C Conclusions

The immediate contact of the Arabidopsis root with a granular composition according to an embodiment of the present invention increased average lateral root density.

### Example 11: Use of a granular composition illustrating the present invention as a plant growth enhancer in a hydroponics system

### A Materials and Methods

*Arabidopsis thaliana* wild type ColO plants were grown in a hydroponics system supplied by Araponics (http://www.araponics.com/) according to the manufacturer's instructions. To explore the effects of a granular composition according to an embodiment of the present invention (Puuritone beads or Monzonite™), the granular composition illustrating the present invention (250 g) was added directly to a nutrient solution (1.2 L) (Figure 8C). The granular composition illustrating the present invention consisted of spherical granules comprising 10% (w/w) of spherical porous silica comprising metallic silver nanoparticles, and 90% (w/w) of Zeolite X. The spherical porous silica comprised 10% by weight of metallic silver nanoparticles compared with the total weight of the porous silica. A granular composition consisting of Zeolite X served as a control and was added to the nutrient solution in a similar amount (Figure 8B). Pure nutrient solution is used as an additional control (Figure 8A). Plants were grown under controlled environmental conditions (light/dark 16/8h, 21º C, light intensity 100 µmol m⁻² s⁻¹) for 5 weeks.

### B. Results

Plants grown on solution containing the granular composition illustrating the present invention (Puuritone beads) displayed short and bushy roots (Figure 8C). Slight but not statistically significant increase of rosette biomass was observed in comparison with plants grown without any beads in the media (Figure 8A and 8C).

### C. Conclusions

A granular composition illustrating the invention present in hydroponic media displayed considerable bioactivity and significantly altered root architecture of Arabidopsis plants. The Arabidopsis plants grown in a hydroponic system in the presence of a granular composition illustrating the invention showed an increase in (the activation of) the number of root axes and an increase in the density of the lateral roots (*i.e*., number of lateral roots on the whole main root divided by the length of the whole main root). Such a change in root architecture of a plant may improve stress tolerance, such as drought tolerance, and may lead to increased yield of the plant (for instance of a crop plant) under stress conditions, such as drought conditions.

### Example 12: Dose-response toxicity tests of porous silica particles illustrating the present invention

*Arabidopsis thaliana* wild type ColO seeds were surfaced-sterilized using chlorine gas overnight and stratified at 4º C for 3 days. For non-treated controls, 32 seeds were sown per each petri dish (d=14 cm) containing 100 ml autoclaved full-strength Murashige and Skoog (MS) medium (1% Sucrose, 0.8% Agar, pH 5.7). Plants were grown horizontally under controlled environmental conditions (light/dark 16/8h, 21º C, light intensity 100 µmol m⁻² s⁻¹). For plants treated with porous silica particles illustrating the present invention, plates were prepared as described above with the exception that the used agar contained 5 %, 10 %, 15 %, and 20 % by weight of the porous silica particles illustrating the invention in powder form, with % by weight compared with the total weight of the agar composition (w/w). Plants were grown for three weeks.

The porous silica particles illustrating the present invention consisted of spherical porous silica comprising 10% by weight of metallic silver nanoparticles, compared with the total weight of the porous silica.

Plants grown on of 5% by weight of porous silica particles illustrating the invention in powder form did not show any signs of toxicity and displayed increased rosette biomass (Figure 9B) compared with control plants (Figure 9A). The porous silica particles illustrating the invention in higher concentrations did not have a positive effect on rosette biomass (Figures 9C, 9D, and 9E). A concentration of 5 % by weight of porous silica particles according to an embodiment of the present invention increased rosette biomass of *in vitro* grown plants (with % by weight compared with the total weight of the agar composition).

### Example 13: Use of a granular composition illustrating the present invention as a plant growth enhancer in maize

Ten sterilized maize kernels (*Zea mays L*.) were distributed with the radicle pointing downwards on absorbing paper (Scott Rollwipe 6681) at about 2 cm from the top, with an interspace of 7-10 cm. The paper was rolled so that the kernels stayed in place. Paper rolls were put in glass tubes (d = 5 cm, h = 23 cm) filled with 300 ml distilled water. A granular composition illustrating the invention or a control granular composition was placed at the bottom of the tubes. The granular composition illustrating the present invention consisted of spherical granules comprising 10% (w/w) of spherical porous silica comprising metallic silver nanoparticles, and 90% (w/w) of Zeolite X. The spherical porous silica comprised 10% by weight of metallic silver nanoparticles, compared with the total weight of the porous silica. The granular composition illustrating the present invention is also referred to herein as "Monzonite™" or "Puuritone beads". The control granular composition consisted of Zeolite X. The control granular composition is also referred to herein as "control beads". Plants were grown under controlled environmental conditions (light/dark 16/8h, 21º C, light intensity 100 µmol m⁻²s⁻¹).

The presence of Puuritone beads in hydroponic system increased the length of the main root of maize plants in comparison with control beads (Figure 10).

In conclusion, a granular composition according to an embodiment of the invention present in a hydroponic media displayed considerable bioactivity and significantly increased main root length of maize plants.

### Example 14: Use of a granular composition illustrating the present invention as a plant growth enhancer in rice

Rice plants (*Oryza sativa L*., cultivar Nipponbare) were grown as hydroponic cultures in paper rolls placed in 50 ml Falcon tubes filled with water. A granular composition illustrating the invention or a control granular composition was placed at the bottom of the tubes. The granular composition illustrating the present invention consisted of spherical granules comprising 10% (w/w) of spherical porous silica comprising metallic silver nanoparticles, and 90% (w/w) of Zeolite X. The spherical porous silica comprised 10% by weight of metallic silver nanoparticles compared with the total weight of the porous silica. The granular composition illustrating the present invention is also referred to herein as "Monzonite™" or "Puuritone beads". The control granular composition consisted of Zeolite X. The control granular composition is also referred to herein as "control beads".

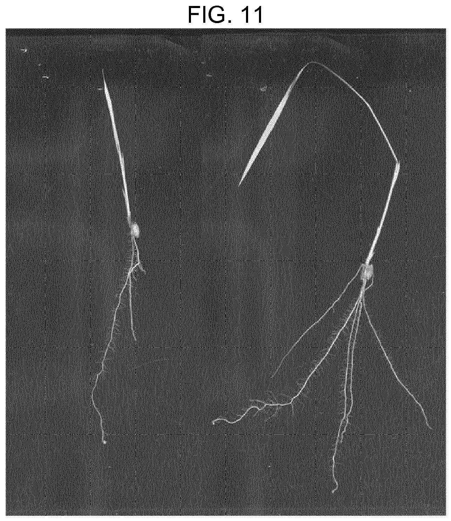

Rice plants grown in the presence of a granular composition illustrating the invention displayed increased shoot biomass and root growth in comparison with control plants (Figure 11).

In conclusion, a granular composition illustrating the invention positively influenced the growth of rice plants grown as hydroponic cultures.

### Example 15: Transcriptome and metabolomic analysis of plants treated with porous silica particles according to an embodiment of the present invention

### A. Transcriptome analysis

In order to get further insight into the growth promoting effects of porous silica particles illustrating the present invention, we used a whole genome transcriptome profiling to characterize which genes are being induced or repressed in plants grown on medium containing porous silica particles illustrating the present invention. Knowing which genes are affected by the porous silica particles illustrating the present invention has the potential to link the observed increase of growth with molecular mechanisms explaining the beneficial effects.

*Arabidopsis thaliana* plants ecotype Columbia 0 were grown under controlled environmental conditions (16h/8h light/dark, 100 µmol m⁻² s⁻¹ light intensity, 21ºC, 70% relative humidity) for three weeks on agar-solidified MS medium (control). For plants treated with porous silica particles illustrating the present invention (also referred to as Puuritone), plants were grown as described above with the exception that the agar composition contained 5% by weight of porous silica particles illustrating the present invention in powder form, with % by weight compared with the total weight of the agar composition (w/w). The porous silica particles illustrating the invention were spherical porous silica particles comprising silver nanoparticles. The porous silica comprised 10% by weight of silver nanoparticles compared with the total weight of the porous silica.

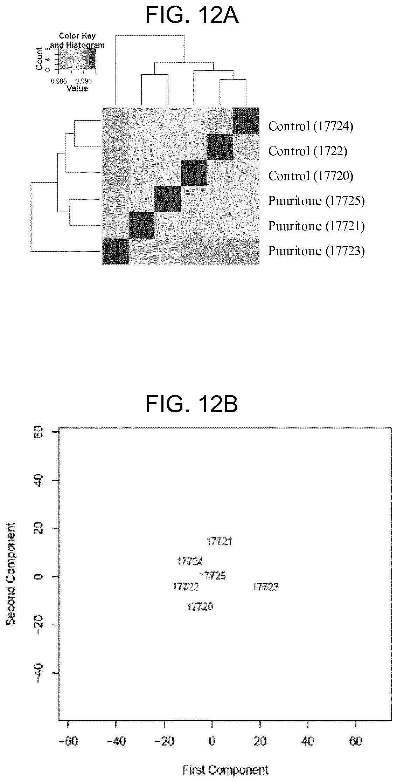

Rosettes of individual plants were pooled together to obtain three biological replicates of treated plants and three biological replicates of control plants and used to extract RNA with the RNeasy Plant Mini Kit (Qiagen). RNA samples were shipped to the VIB Nucleomics core facility (http://www.nucleomics.be/) where gene expression was analyzed using Affymetrix Arabidopsis ATH1 genome arrays following standard protocols. After processing the raw data, 38 genes were identified with statistically different (cut off *p* ≤ 0.1; fold change ± 1.5) transcript abundance in treated plants relative to the controls. Only a minor proportion of the genes in Arabidopsis was affected by the treatment (Figure 12). Twelve of the genes were induced, whereas the remaining twenty six were repressed in the plants grown on porous silica particles in powder form.

Major classification categories overrepresented in the gene list were related to cell wall, responses to biotic and abiotic stimulus, response to stress, polyamine metabolism, and development.

### B. Metabolomic analysis

The main objective of the metabolomic analysis was to identify metabolites affected by treatment with porous silica particles illustrating the present invention. The term metabolite is used here to refer to intermediates of the metabolism and include any small molecule found naturally in Arabidopsis. Metabolite profiling is often used in the scientific community to complement the information obtained from gene expression experiments. This combined approach offers an even deeper understanding of the molecular mechanisms functioning in plants.

To identify and quantify metabolite pools in Arabidopsis plants grown on porous silica particles illustrating the present invention, we used two analytical methods, namely GC/MS (Gas Chromatography coupled to Mass Spectrometry) and UPLC/FT-MS (Ultra Performance Liquid Chromatography coupled to Fourier transform Mass Spectrometry). GC/MS profiling gives information about primary metabolites such as amino acids, sugars, and organic acids, whereas UPLC/FT-MS is well suited for non-targeted profiling of secondary metabolites (phenylpropanoids, flavoinoids, etc.). The results from the UPLC/FT-MS experiment are still to be analyzed.

Arabidopsis plants were grown as described above for the transcriptome profiling and harvested at the same time as the material used for gene expression analysis. Ten biological replicates from shoots of plants grown on porous silica particles illustrating the present invention and ten replicates from control plants were collected. Samples were processed and analyzed using standard protocols.

Relatively few metabolite pools were altered significantly (p value ≤ 0.05) in treated plants in comparison with the controls. Moreover, the majority of the changes were modest. The steady-state levels of the measured amino acids were not affected by the treatment with porous silica particles illustrating the present invention, with the exception of the alanine and asparagine contents which were slightly increased (less than two fold) in plants grown on porous silica particles in powder form. Interestingly, the phenylalanine pool, serving as a precursor for the biosynthesis of aromatic amino acids, was decreased. Three metabolites from the citric acid cycle (fumarate, malate and citrate) were also slightly but significantly decreased in treated plants. A similar trend was observed for glycerate and glycerate-3-phosphate. In contrast, two metabolites involved in polyamine biosynthesis (putrescine and ornithine) were induced by porous silica particles illustrating the present invention.

### C. Conclusion

Transcriptome and metabolite profiling were used to get further insight into the growth promoting effects of porous silica particles illustrating the present invention. A minor proportion of the genes in Arabidopsis was affected by the treatment (Figure 12), suggesting that the increased growth is not accompanied with drastic transcriptional changes. This confirmed the observation that plants treated with 5% by weight of porous silica particles illustrating the present invention in powder form showed no signs of toxicity. Moreover, the observed differences in transcript abundances were modest and only one gene exceeded four-fold induction. Based on the specific roles of the differentially regulated genes and their classification, we could relate the effect of porous silica comprising a particulate metallic element to subtle transcriptional responses observed following environmental perturbations. The transcriptional profile resembled changes provoked by abiotic stresses. The effect of porous silica particles illustrating the present invention is subtle both in terms of overall number of transcripts affected and their abundance.

The metabolite profiling of plants treated with porous silica particles illustrating the present invention further corroborated the idea of a mild perturbation of the transcriptional network. Two metabolites (putrescine and ornithine) involved in polyamine biosynthesis accumulated in plants grown on porous silica particles illustrating the present invention. Polyamines are crucial players in stress tolerance to various environmental conditions and the increased pools of these metabolites indicate activation of this pathway. Evidence for induction of the polyamine biosynthetic pathway could be also found in the transcriptome profiling. The gene spermidine synthase 3 (SPDS3), part of the polyamine biosynthetic process, was induced by the porous silica particles illustrating the present invention.

### Example 16: Long term usage of a granular composition according to an embodiment of the present invention

*Arabidopsis thaliana* wild type ColO plants are grown in a hydroponics system supplied by Araponics (http://www.araponics.com/) according to the manufacturer's instructions. Plants are grown in a nutrient solution. A granular composition illustrating the present invention (250 g) is added to 1.2 L nutrient solution. The granular composition illustrating the present invention consists of 10% (w/w) spherical porous silica comprising silver nanoparticles and 90% (w/w) Zeolite X. The spherical porous silica comprised 10% by weight of silver nanoparticles, compared with the total weight of the porous silica. This granular composition is also referred to herein as "Monzonite™" or "Puuritone beads". The same amount of a control granular composition consisting of Zeolite X is used as a control.

Plants are also grown in the nutrient solution without any granular composition. Plants are grown under controlled environmental conditions (light/dark 16/8h, 21º C, light intensity 100 µmol m⁻² s⁻¹) for 4 weeks. After 4 weeks, the effect of the granular composition illustrating the present invention on root architecture and rosette biomass is recorded. The granular composition illustrating the present invention and the control granular composition are removed from the nutrient solution and rinsed three consecutive times with distilled water. The recuperated granular compositions are used in a second round of experiments in which plants are grown and evaluated as described above. The procedure is repeated five times in total.

This experiment illustrates that a granular composition according to an embodiment of the present invention may be recycled and reused for at least two rounds of plant growth, such as for two, three, four, five, or six rounds of plant growth, without substantial loss of activity and/or without plant growth damage.

## Claims

1. Use of a porous silica particle as a plant growth enhancer, wherein said porous silica particle comprises porous silica comprising a particulate metallic element, wherein the porous silica is microporous or mesoporous silica, and the particulate metallic element has an oxidation state zero.

2. The use according to claim 1, wherein the porous silica particle is spherical.

3. The use according to claim 1 or 2, wherein the porous silica particle is embedded in a carrier material.

4. Use of a granular composition as a plant growth enhancer, wherein said granular composition comprising a carrier material and one or more spherical porous silica particles embedded in said carrier material, wherein each spherical porous silica particle comprises spherical porous silica comprising a particulate metallic element, wherein the porous silica is microporous or mesoporous silica, and the particulate metallic element has an oxidation state zero.

5. The use according to any one of claims 1 to 4, wherein the microporous silica has a mean pore diameter of less than 2.0 nm, or wherein the mesoporous silica has a mean pore diameter of from 2.0 nm to 50.0 nm.

6. The use according to any one of claims 1 to 5, wherein the porous silica has a particle size with a mean diameter of from 50 nm to 500 nm, preferably of from 100 nm to 400 nm, more preferably of from 200 nm to 300 nm.

7. The use according to any one of claims 1 to 6, wherein the porous silica has a mean pore diameter of from 1.0 nm to 4.0 nm, preferably of from 1.5 nm to 3.5 nm, more preferably of from 2.0 nm to 3.0 nm.

8. The use according to any one of claims 1 to 7, wherein the metallic element is a metallic nanoparticle.

9. The use according to any one of claims 1 to 8, wherein the metallic element is a noble metal.

10. The use according to any one of claims 1 to 8, wherein the metallic element is a group 11 element selected from silver (Ag), copper (Cu), or gold (Au).

11. The use according to any one of claims 1 to 10, wherein the porous silica or spherical porous silica comprises a zeolite.

12. The use according to any one of claims 1 to 11, wherein the particulate metallic element is particulate silver.

13. The use according to any one of claims 1 to 12, wherein the porous silica or spherical porous silica comprises of from 1.0 % to 20.0 % by weight of the particulate metallic element, with % by weight compared with the total weight of the porous silica or spherical porous silica, preferably of from 5.0 to 15.0%.

14. The use according to any one of claims 1 to 13, wherein the porous silica particle or granular composition is used to increase one or more of the weight of the plant, the length of the plant, the yield of the plant, the weight of the leaves, the number of the leaves, the length of the leaves, the yield of the leaves, the weight of the roots, the length of the roots, the number of roots, the diameter of the roots, the yield of the roots, and the length of the region of root hair growth of the plant.

15. The use according to any one of claims 1 to 14, wherein the plant is a crop, preferably a vegetable crop.

16. The use according to any one of claims 4 to 15, wherein the granular composition is spherical.

17. The use according to claim 16, wherein the spherical granular composition has a mean diameter of from 1 mm to 15 mm.

18. The use according to any one of claims 4 to 17, wherein the spherical porous silica comprises of from 1.0 % to 20.0 % by weight of particulate silver, with % by weight compared with the total weight of the spherical porous silica, preferably of from 5.0 to 15.0%.

19. The use according to any one of claims 3 to 18, wherein the carrier material is a silicate, preferably an aluminosilicate, more preferably zeolite.

## Patentansprüche

1. Verwendung eines porösen Silikapartikels als Pflanzenwachstumsverstärker, wobei das poröse Silikapartikel poröses Silika umfasst, umfassend ein partikuläres Metallelement, wobei das poröse Silika mikroporöses oder mesoporöses Silika ist, und das partikuläre Metallelement einen Oxidationszustand Null aufweist.

2. Verwendung nach Anspruch 1, wobei das poröse Silikapartikel sphärisch ist.

3. Verwendung nach Anspruch 1 oder 2, wobei das poröse Silikapartikel in ein Trägermaterial eingebettet ist.

4. Verwendung einer granulären Zusammensetzung als Pflanzenwachstumsverstärker, wobei die granuläre Zusammensetzung, die ein Trägermaterial und ein oder mehrere sphärische poröse Silikapartikel umfasst, die in das Trägermaterial eingebettet sind, wobei jedes sphärische poröse Silikapartikel sphärisches poröses Silika, umfassend ein partikuläres Metallelement, umfasst, wobei das poröse Silika mikroporöses oder mesoporöses Silika ist, und das partikuläre Metallelement einen Oxidationszustand von Null aufweist.

5. Verwendung nach einem der Ansprüche 1 bis 4, wobei das mikroporöse Silika einen mittleren Porendurchmesser von weniger als 2,0 nm aufweist, oder wobei das mesoporöse Silika einen mittleren Porendurchmesser von 2,0 nm bis 50,0 nm aufweist.

6. Verwendung nach einem der Ansprüche 1 bis 5, wobei das poröse Silika eine Partikelgröße mit einem mittleren Durchmesser von 50 nm bis 500 nm, vorzugsweise von 100 nm bis 400 nm, noch bevorzugter von 200 nm bis 300 nm aufweist.

7. Verwendung nach einem der Ansprüche 1 bis 6, wobei das poröse Silika einen mittleren Porendurchmesser von 1,0 nm bis 4,0 nm, vorzugsweise von 1,5 nm bis 3,5 nm, noch bevorzugter von 2,0 nm bis 3,0 nm aufweist.

8. Verwendung nach einem der Ansprüche 1 bis 7, wobei das metallische Element ein metallisches Nanopartikel ist.

9. Verwendung nach einem der Ansprüche 1 bis 8, wobei das metallische Element ein Edelmetall ist.

10. Verwendung nach einem der Ansprüche 1 bis 8, wobei das metallische Element ein Element der Gruppe 11 ist, das aus Silber (Ag), Kupfer (Cu) oder Gold (Au) ausgewählt ist.

11. Verwendung nach einem der Ansprüche 1 bis 10, wobei das poröse Silika oder sphärische poröse Silika ein Zeolith umfasst.

12. Verwendung nach einem der Ansprüche 1 bis 11, wobei das partikuläre metallische Element partikuläres Silber ist.

13. Verwendung nach einem der Ansprüche 1 bis 12, wobei das poröse Silika oder sphärische poröse Silika von 1,0 bis 20,0 Gew.-% des partikulären metallischen Elements, wobei das Gew.-% dem Gesamtgewicht des porösen Silika oder sphärischen porösen Silika gegenübersteht, vorzugsweise von 5,0 bis 15,0 Gew.-% umfasst.

14. Verwendung nach einem der Ansprüche 1 bis 13, wobei das poröse Silikapartikel oder die granuläre Zusammensetzung dazu verwendet wird, eins oder mehr von dem Gewicht der Pflanze, der Länge der Pflanze, dem Ertrag der Pflanze, dem Gewicht der Blätter, der Anzahl der Blätter, der Länge der Blätter, dem Ertrag der Blätter, dem Gewicht der Wurzeln, der Länge der Wurzeln, der Anzahl der Wurzeln, dem Durchmesser der Wurzeln, dem Ertrag der Wurzeln und der Länge der Region mit Wurzelhaarwachstum der Pflanze zu steigern.

15. Verwendung nach einem der Ansprüche 1 bis 14, wobei die Pflanze eine Kultur, vorzugsweise eine Gemüsekultur ist.

16. Verwendung nach einem der Ansprüche 4 bis 15, wobei die granuläre Zusammensetzung sphärisch ist.

17. Verwendung nach Anspruch 16, wobei die sphärische granuläre Zusammensetzung einen mittleren Durchmesser von 1 mm bis 15 mm aufweist.

18. Verwendung nach einem der Ansprüche 4 bis 17, wobei das sphärische poröse Silika von 1,0 bis 20,0 Gew.-% partikuläres Silber, wobei das Gew.-% dem Gesamtgewicht des sphärischen porösen Silikas gegenübersteht, von vorzugsweise 5,0 bis 15,0 Gew.-% umfasst.

19. Verwendung nach einem der Ansprüche 3 bis 18, wobei das Trägermaterial ein Silikat, vorzugsweise ein Aluminiumsilikat, noch bevorzugter Zeolith ist.

## Revendications

1. Utilisation d'une particule de silice poreuse comme améliorateur de la croissance végétale, dans laquelle ladite particule de silice poreuse comprend de la silice poreuse comprenant un élément métallique particulaire, où la silice poreuse est une silice microporeuse ou mésoporeuse, et l'élément métallique particulaire possède un état d'oxydation de zéro.

2. Utilisation selon la revendication 1, dans laquelle la particule de silice poreuse est sphérique.

3. Utilisation selon la revendication 1 ou 2, dans laquelle la particule de silice poreuse est incluse dans un matériau véhicule.

4. Utilisation d'une composition granulaire comme améliorateur de la croissance végétale, dans laquelle ladite composition granulaire comprenant un matériau véhicule et une ou plusieurs particules de silice poreuse sphériques incluses dans ledit matériau véhicule, où chaque particule de silice poreuse sphérique comprend de la silice poreuse sphérique comprenant un élément métallique particulaire, où la silice poreuse est une silice microporeuse ou mésoporeuse, et l'élément métallique particulaire possède un état d'oxydation de zéro.

5. Utilisation selon l'une quelconque des revendications 1 à 4, dans laquelle la silice microporeuse possède un diamètre de pores moyen inférieur à 2,0 nm, ou où la silice mésoporeuse possède un diamètre de pores moyen allant de 2,0 nm à 50,0 nm.

6. Utilisation selon l'une quelconque des revendications 1 à 5, dans laquelle la silice poreuse possède une taille de particules ayant un diamètre moyen allant de 50 nm à 500 nm, préférablement allant de 100 nm à 400 nm, plus préférablement allant de 200 nm à 300 nm.

7. Utilisation selon l'une quelconque des revendications 1 à 6, dans laquelle la silice poreuse possède un diamètre de pores moyen allant de 1,0 nm à 4,0 nm, préférablement allant de 1,5 nm à 3,5 nm, plus préférablement allant de 2,0 nm à 3,0 nm.

8. Utilisation selon l'une quelconque des revendications 1 à 7, dans laquelle l'élément métallique est une nanoparticule métallique.

9. Utilisation selon l'une quelconque des revendications 1 à 8, dans laquelle l'élément métallique est un métal noble.

10. Utilisation selon l'une quelconque des revendications 1 à 8, dans laquelle l'élément métallique est un élément du Groupe 11 choisi parmi l'argent (Ag), le cuivre (Cu) ou l'or (Au).

11. Utilisation selon l'une quelconque des revendications 1 à 10, dans laquelle la silice poreuse ou la silice poreuse sphérique comprend une zéolithe.

12. Utilisation selon l'une quelconque des revendications 1 à 11, dans laquelle l'élément métallique particulaire est constitué d'argent particulaire.

13. Utilisation selon l'une quelconque des revendications 1 à 12, dans laquelle la silice poreuse ou la silice poreuse sphérique comprend de 1,0% à 20,0% en poids de l'élément métallique particulaire, le % en poids étant comparé au poids total de la silice poreuse ou de la silice poreuse sphérique, préférablement allant de 5,0 à 15,0%.

14. Utilisation selon l'une quelconque des revendications 1 à 13, dans laquelle la particule de silice poreuse ou la composition granulaire est utilisée pour augmenter un(e) ou plusieurs parmi le poids de la plante, la longueur de la plante, le rendement de la plante, le poids des feuilles, le nombre de feuilles, la longueur des feuilles, le rendement des feuilles, le poids des racines, la longueur des racines, le nombre de racines, le diamètre des racines, le rendement des racines, et la longueur de la zone de croissance du chevelu racinaire de la plante.

15. Utilisation selon l'une quelconque des revendications 1 à 14, dans laquelle la plante est une culture, préférablement une culture de légumes.

16. Utilisation selon l'une quelconque des revendications 4 à 15, dans laquelle la composition granulaire est sphérique.

17. Utilisation selon la revendication 16, dans laquelle la composition granulaire sphérique possède un diamètre moyen allant de 1 mm à 15 mm.

18. Utilisation selon l'une quelconque des revendications 4 à 17, dans laquelle la silice poreuse sphérique comprend de 1,0% à 20,0% en poids d'argent particulaire, le % en poids étant comparé au poids total de la silice poreuse sphérique, préférablement allant de 5,0 à 15,0%.

19. Utilisation selon l'une quelconque des revendications 3 à 18, dans laquelle le matériau véhicule est un silicate, préférablement un aluminosilicate, plus préférablement une zéolithe.
